# EUROPEAN PATENT APPLICATION

(11) **EP 4 708 947 A1**
(43) Date of publication of application: **11.03.2026**
(21) Application number: 23938734.3
(22) Date of filing: 26.05.2023
(51) Int. Cl.: H04W 12/37

(54) **SIGNALING TRANSMISSION METHOD, DATA TRANSMISSION METHOD, AND COMMUNICATION DEVICE**

(71) Applicant: Huawei Technologies Co., Ltd., Shenzhen, Guangdong 518129 (CN)
(72) Inventor: SONG, Yurong, Shenzhen, Guangdong 518129 (CN); LIU, Faye, Shenzhen, Guangdong 518129 (CN); WANG, Donghui, Shenzhen, Guangdong 518129 (CN); WANG, Wenhui, Shenzhen, Guangdong 518129 (CN)
(74) Representative: Körber, Martin Hans
(86) International application number: PCT/CN2023/096622
(87) International publication number: WO 2024/243735

(57) **Abstract**

This application provides a signaling transmission method, a data transmission method, and a communication apparatus, and proposes a trustworthiness protocol and protocol stack of a communication network, including a trustworthiness control plane protocol and protocol stack, and a trustworthiness service plane protocol and protocol stack. The trustworthiness control plane protocol is used for transmission of trustworthiness signaling, management of a trustworthiness capability, subscription to trustworthiness information, negotiation of a trustworthiness policy between communication nodes, a trustworthiness service, and the like. The trustworthiness service plane protocol is used for transmission and processing of trustworthiness data. In this case, a security function and a communication function are decoupled, and the security function can be independently evolved and upgraded. This is conducive to a technology development trend of security function enhancement in a future network. In addition, security functions of some protocols that originally have the security functions are enhanced, and security functions are introduced into underlying connection protocols, to improve network security.

## Description

### TECHNICAL FIELD

Embodiments of this application relate to the field of wireless communication technologies, and more specifically, to a signaling transmission method and a communication apparatus.

### BACKGROUND

Communication protocols in an existing mobile network may be roughly classified into two types: a protocol responsible for a connection and a related protocol responsible for a communication service. Security is integrated in functions of a plurality of protocols, in other words, a security function is closely coupled with a communication function. Consequently, a plurality of protocols of a plurality of communication nodes such as a terminal, an access network device, and a core network device need to be modified to update and upgrade the security function, and a workload is heavy and an operation is complex. However, a future mobile network will have a security inherent feature, and security is gradually becoming more important. How to resolve many problems caused by a current deployment status of a security function in an existing communication protocol is an urgent problem to be resolved.

### SUMMARY

This application provides a signaling transmission method, a data transmission method, and a communication apparatus, so that a security function and a communication function are decoupled, the security function can be independently evolved, and a development trend of a future communication network security technology is met.

According to a first aspect, a signaling transmission method is provided, and is applied to a first communication apparatus, for example, a communication node, a chip, a chip system, a circuit, or a logical module. The first communication apparatus includes a first protocol layer and a second protocol layer below the first protocol layer, the second protocol layer includes a part or all of the following protocol layers: a protocol layer for data packet processing, a protocol layer for transmission, a protocol layer for establishing a connection, and a protocol layer for establishing a channel, and the method includes: The first protocol layer of the first communication apparatus generates first trustworthiness signaling, where the first trustworthiness signaling is used for one or more of the following functions: management of a trustworthiness function, subscription to trustworthiness information, negotiation of a trustworthiness policy, or a request for a trustworthiness service; and the first communication apparatus outputs the first trustworthiness signaling.

Based on this technical solution, a first protocol layer (that is, a trustworthiness control plane protocol layer) is deployed on a communication apparatus. The first protocol layer may run at a higher layer of a protocol stack, and is for trustworthiness signaling transmission, to implement management of a trustworthiness capability, subscription to trustworthiness information, negotiation of a trustworthiness policy between communication nodes, a trustworthiness service between the communication nodes, and the like. In this solution, a security function is decoupled from a communication function. This facilitates independent evolution and flexible deployment of the security function.

In addition, an independent security protocol can provide standardized, hot-swap, and more diversified security technologies, provide more flexible and advanced security support for a communication network, and enable another communication protocol to focus on a communication function, to improve running efficiency.

Optionally, in this application, descriptions related to "trustworthiness" may be replaced with descriptions related to "security". For example, a trustworthiness function may also be described as a security function, and trustworthiness information may also be described as security information. Name descriptions of the functions, the messages, or the information is not limited.

With reference to the first aspect, in some implementations of the first aspect, that the first communication apparatus outputs the first trustworthiness signaling includes: The first communication apparatus sends the first trustworthiness signaling to a second communication apparatus. The method further includes: The first communication apparatus receives second trustworthiness signaling from the second communication apparatus, where the second trustworthiness signaling is a response to the first trustworthiness signaling.

In this implementation, trustworthiness signaling is transmitted between the two communication apparatuses based on the first protocol layer, and signaling transmission has higher security.

With reference to the first aspect, in some implementations of the first aspect, the first communication apparatus further includes a third protocol layer, the third protocol layer is above the second protocol layer, and the method further includes: The third protocol layer of the first communication apparatus generates third trustworthiness signaling, where the third trustworthiness signaling is used for one or more of the following functions: the management of the trustworthiness function, the subscription to the trustworthiness information, the negotiation of the trustworthiness policy, or the request for the trustworthiness service; and the first communication apparatus outputs the third trustworthiness signaling.

This implementation provides an end-to-end trustworthiness control plane protocol stack, including a trustworthiness control plane protocol (for example, the first protocol layer). The trustworthiness control plane protocol deployed on the first communication apparatus includes a trustworthiness control plane protocol for signaling exchange between the first communication apparatus and different network elements. For example, the first communication apparatus is a terminal. A trustworthiness control plane protocol deployed on the terminal includes a protocol layer (for example, the first protocol layer) for transmission of trustworthiness signaling between the terminal and a radio access network RAN node, and a protocol layer (for example, the third protocol layer) for transmission of trustworthiness signaling between the terminal and a core network CN. The trustworthiness control plane protocol stack provides security support for a communication protocol, to facilitate independent evolution of the security function.

With reference to the first aspect, in some implementations of the first aspect, that the first communication apparatus outputs the third trustworthiness signaling includes: The first communication apparatus sends the third trustworthiness signaling to a third communication apparatus. The method further includes: The first communication apparatus receives fourth trustworthiness signaling from the third communication apparatus, where the fourth trustworthiness signaling is a response to the third trustworthiness signaling.

In this implementation, trustworthiness signaling is transmitted between the two communication apparatuses based on the third protocol layer, and signaling transmission has higher security.

With reference to the first aspect, in some implementations of the first aspect, management of a trustworthiness capability includes one or more of the following: establishment of the trustworthiness function; activation of the trustworthiness function; initial configuration of the trustworthiness function; update of the trustworthiness function; addition of the trustworthiness function; deletion of the trustworthiness function; or state transition of the trustworthiness function.

Compared with that capability management of a communication node in an existing network is performed by a management plane, the trustworthiness protocol provided in this application supports the management of the trustworthiness capability, and provides flexible and diversified management of the trustworthiness capability.

With reference to the first aspect, in some implementations of the first aspect, the trustworthiness information includes one or more of the following: a trustworthiness requirement, a trustworthiness capability, a trustworthiness policy (also referred to as a security policy) between the first communication apparatus and another communication apparatus, or a network-wide trustworthiness policy, where the trustworthiness policy between the first communication apparatus and the another communication apparatus is used by the first communication apparatus to determine a trustworthiness algorithm between the first communication apparatus and the another communication apparatus; and the network-wide trustworthiness policy is used to configure, manage, or control trustworthiness functions of a part or all of communication apparatuses in a network.

The trustworthiness information in this application includes information about a plurality of aspects related to trustworthiness in a possible capability management procedure, to support flexible and diversified subscription to trustworthiness-related information.

With reference to the first aspect, in some implementations of the first aspect, the trustworthiness service includes one or more of the following: an authentication service; an authorization service; a trustworthiness measurement service; a blockchain service; a situational awareness service; or a network-wide trustworthiness policy service.

Based on this implementation, the trustworthiness protocol provided in this application supports implementation of a service-oriented trustworthiness function, and can provide security support for functions such as trustworthiness measurement, a blockchain, and situational awareness that may be supported by a future communication network.

With reference to the first aspect, in some implementations of the first aspect, the first communication apparatus and the second communication apparatus include any one of the following:
The first communication apparatus is a terminal apparatus, and the second communication apparatus is an access network apparatus;
the first communication apparatus is a terminal apparatus, and the second communication apparatus is a core network apparatus;
the first communication apparatus is an access network apparatus, and the second communication apparatus is a core network apparatus;
both the first communication apparatus and the second communication apparatus are access network apparatuses; or
both the first communication apparatus and the second communication apparatus are core network apparatuses.

The first communication apparatus and the second communication apparatus may be any combination of a terminal, a RAN node, and a network function of a core network. Therefore, the trustworthiness protocol provided in this application supports end-to-end trustworthiness signaling transmission.

According to a second aspect, a data transmission method is provided, and is applied to a first communication apparatus, for example, a communication node, a chip, a chip system, a circuit, or a logical module. The first communication apparatus includes a first protocol layer and a second protocol layer below the first protocol layer, the second protocol layer includes a part or all of the following protocol layers: a protocol layer for data processing, a protocol layer for transmission, a protocol layer for establishing a connection, and a protocol layer for establishing a channel, and the method includes:
The first protocol layer of the first communication apparatus processes data from an upper layer to obtain a service data unit corresponding to the first protocol layer, where the data of the upper layer includes trustworthiness data.

The first protocol layer of the first communication apparatus maps the service data unit corresponding to the first protocol layer to a bearer to obtain a protocol data unit corresponding to the first protocol layer.

The first communication apparatus outputs the protocol data unit corresponding to the first protocol layer.

Based on this technical solution, a first protocol layer (that is, a trustworthiness service plane protocol layer) is deployed on a communication apparatus. The first protocol layer may run at a higher layer (for example, a highest layer) of a protocol stack, to transmit and process trustworthiness data, and provide security support for processing and transmission of the trustworthiness data. A security function is decoupled from a communication function. This facilitates independent evolution and flexible deployment of the security function, and further includes many advantages of the trustworthiness control plane protocol layer. Details are not described.

With reference to the second aspect, in some implementations of the second aspect, the method further includes:
The first protocol layer adds a header of the first protocol layer to the service data unit corresponding to the first protocol layer, to obtain the protocol data unit corresponding to the first protocol layer.

In this implementation, the header of the first protocol layer can be added to the service data unit corresponding to the first protocol layer, to optimize routing and forwarding of a trustworthiness data packet.

With reference to the second aspect, in some implementations of the second aspect, that the first protocol layer processes data from the upper layer to obtain the service data unit corresponding to the first protocol layer includes:
The first protocol layer preprocesses the data from the upper layer to obtain preprocessed data, and processes the preprocessed data to obtain the service data unit corresponding to the first protocol layer.

This implementation supports preprocessing of the trustworthiness data, to meet a requirement for performing subsequent processing related to the trustworthiness data.

The method in the second aspect corresponds to a method performed by a transmitting end of the trustworthiness data, and provides a method procedure for sending the trustworthiness data.

According to a third aspect, a data transmission method is provided, and is applied to a second communication apparatus, for example, a communication node, a chip, a chip system, a circuit, or a logical module. The second communication apparatus includes a first protocol layer and a second protocol layer below the first protocol layer. The second protocol layer includes a part or all of the following protocol layers: a protocol layer for data processing, a protocol layer for transmission, a protocol layer for establishing a connection, and a protocol layer for establishing a channel, and the method includes:
The second communication apparatus receives a protocol data unit corresponding to the first protocol layer, where the protocol data unit corresponding to the first protocol layer is from a first communication apparatus.

The second communication apparatus determines whether a termination point of the protocol data unit corresponding to the first protocol layer is the second communication apparatus.

When the termination point of the protocol data unit corresponding to the first protocol layer is the second communication apparatus, the second communication apparatus processes the protocol data unit corresponding to the first protocol layer to obtain a service data unit corresponding to the first protocol layer.

When the termination point of the protocol data unit corresponding to the first protocol layer is not the second communication apparatus, the second communication apparatus routes and forwards the protocol data unit corresponding to the first protocol layer.

The method in the third aspect corresponds to a method performed by a receiving end of trustworthiness data, and provides a method procedure for receiving the trustworthiness data. The first protocol layer (that is, a trustworthiness service plane protocol layer) determines a termination point of a received data packet, and performs subsequent processing based on a determining result. When determining that the received data packet is sent to the first protocol layer, the first protocol layer processes the received data packet to obtain trustworthiness data from a transmitting end.

With reference to the third aspect, in some implementations of the third aspect, when the termination point of the protocol data unit corresponding to the first protocol layer is the second communication apparatus, that the second communication apparatus processes the protocol data unit corresponding to the first protocol layer to obtain the service data unit corresponding to the first protocol layer includes any one of the following:
The first protocol layer of the second communication apparatus preprocesses the protocol data unit corresponding to the first protocol layer, performs, based on data obtained through preprocessing, reverse mapping from the service data unit corresponding to the first protocol layer to a bearer to obtain the service data unit corresponding to the first protocol layer, and processes the service data unit corresponding to the first protocol layer to obtain a processed service data unit corresponding to the first protocol layer; or
the first protocol layer of the second communication apparatus performs, based on the protocol data unit corresponding to the first protocol layer, reverse mapping from the service data unit corresponding to the first protocol layer to a bearer to obtain the service data unit corresponding to the first protocol layer; and processes the service data unit corresponding to the first protocol layer to obtain a processed service data unit corresponding to the first protocol layer; or
the first protocol layer of the second communication apparatus performs, based on the protocol data unit corresponding to the first protocol layer, reverse mapping from the service data unit corresponding to the first protocol layer to a bearer to obtain the service data unit corresponding to the first protocol layer; and processes the service data unit corresponding to the first protocol layer to obtain a processed service data unit corresponding to the first protocol layer, where the first protocol layer further includes the following processing: removing a header of the first protocol layer of the processed service data unit corresponding to the first protocol layer to obtain trustworthiness data.

The foregoing implementations provide several different implementations in which the trustworthiness service plane protocol layer of the receiving end parses the received data packet, and the several implementations may correspond to corresponding processing of the transmitting end.

In some implementations of the second aspect or the third aspect, the trustworthiness data is one or more of the following:
blockchain-related data, situational awareness-related data, homomorphic encryption-related data, trustworthiness root management-related data, or a key.

In some implementations of the second or third aspect, if the data of the upper layer includes the blockchain-related data, that the first protocol layer processes the data from the upper layer includes: formatting and de-formatting of the blockchain-related data.

If the data of the upper layer includes the situational awareness-related data, that the first protocol layer processes the data from the upper layer includes one or more of the following processing: classification of the situational awareness-related data or information extraction of the situational awareness-related data.

If the data of the upper-layer includes the homomorphic encryption-related data, that the first protocol layer processes the data from the upper layer includes one or more of the following processing: cryptographic computation or aggregated computation.

For functions such as a blockchain, situational awareness, and homomorphic encryption that may be supported by a future communication network, processing of the trustworthiness data performed by a trustworthiness service plane protocol stack in this application may cover some processing supporting these functions. This is conducive to a future development trend of the communication network, and provides feasible technical support for the development trend.

According to a fourth aspect, a communication method is provided, and is applied to a communication apparatus, for example, a communication node, a chip, a chip system, a circuit, or a logical module. The communication apparatus includes a medium access control layer, and the method includes: The medium access control layer processes a message from an upper layer to obtain a first message, where the message of the upper layer includes a trustworthiness message and/or a connection-related message; and the medium access control layer outputs the first message, where processing performed by the medium access control layer on the message of the upper layer includes one or more of the following: mapping between a logical channel and a transport channel of a trustworthiness message; multiplexing a service data unit of the medium access control layer corresponding to a trustworthiness message belonging to one or different logical channels and/or a service data unit of the medium access control layer corresponding to a connection-related message into a transport block TB; or processing of scheduling priorities of a bearer of the trustworthiness message and a bearer of the connection-related message.

Based on the method provided in the fourth aspect, a security function is introduced into an underlying connection plane protocol (for example, the medium access control layer), to improve security of the underlying connection plane.

With reference to the fourth aspect, in some implementations of the fourth aspect, the communication apparatus includes a physical layer, and the method includes:
The physical layer receives the first message from the medium access control layer; the physical layer performs security processing on the first message to obtain a second message; and the physical layer outputs the second message, where the security processing includes any one of the following: deriving a security key of the physical layer, encrypting the first message based on the security key to obtain a ciphertext, and performing integrity protection on the ciphertext to obtain the second message; or processing the first message by using a physical layer security technology based on precoding or coding to obtain the second message.

In this implementation, a security function can be further introduced into the physical layer to support physical layer security.

Introduction of the security function into the medium access control layer and the physical layer meets a development trend of a future network security technology. Other communication protocols can focus on a communication function to improve running efficiency.

According to a fifth aspect, a communication method is provided, and is applied to a communication apparatus, for example, a communication node, a chip, a chip system, a circuit, or a logical module. The communication apparatus includes a security module, and the method includes:
The security module performs, based on a security algorithm, security processing on an upper-layer message of a physical layer to obtain a first message; or
the security module sends security processing information to a first module of the communication apparatus, where the security processing information includes information required for the first module to perform security processing on the upper-layer message of the physical layer, and the first module performs security processing on the upper-layer message of the physical layer based on the security algorithm and the security processing information to obtain the first message; and
the security module or the first module outputs the first message.

With reference to the fourth aspect, in some implementations of the fourth aspect, the security processing includes one or more of the following:
encrypting the upper-layer message of the physical layer to obtain a ciphertext, where the first message includes the ciphertext; or
encrypting the upper-layer message of the physical layer to obtain a ciphertext, and performing integrity protection on the ciphertext to obtain the first message.

Based on the method provided in the fifth aspect, a security function of a protocol layer that originally has a simple security function in a communication protocol is enhanced, to support higher-level security, for example, a higher-level encryption algorithm.

In addition, it is proposed that a security module is deployed in a communication apparatus, so that a process of parsing and calculating a security parameter is performed in the security module, to achieve higher security and effectively avoid leakage of the security parameter.

For example, in the foregoing implementation, a service data unit may be represented as an SDU, a protocol data unit may be represented as a PDU, and a medium access control layer may be represented as a MAC layer.

According to a sixth aspect, a communication apparatus is provided. The communication apparatus includes a one-to-one corresponding module or unit configured to perform the method in any one of the first aspect to the fifth aspect or any one of the possible implementations of any one of the aspects.

According to a seventh aspect, a communication apparatus is provided. The communication apparatus includes at least one processor, where the at least one processor is coupled to at least one memory, and the at least one processor is configured to execute a computer program or instructions stored in the at least one memory, to enable the communication apparatus to perform the method in any one of the first aspect to the fifth aspect or any one of the possible implementations of these aspects.

According to an eighth aspect, a chip is provided. The chip includes a processor and a communication interface. The communication interface is configured to receive to-be-processed information and/or data, and send the to-be-processed information and/or data to the processor. The processor is configured to process the to-be-processed information and/or data, to enable a communication apparatus in which a chip is installed to perform the method in any one of the first aspect to the fifth aspect or any one of the possible implementations of these aspects.

According to a ninth aspect, a computer-readable storage medium is provided. The computer-readable storage medium stores computer instructions. When the computer instructions are run on a computer, the method in any one of the first aspect to the fifth aspect or any one of the possible implementations of these aspects is performed.

According to a tenth aspect, a computer program product is provided. The computer program product includes computer program code. When the computer program code is run on a computer, the method in any one of the first aspect to the fifth aspect or any one of the possible implementations of these aspects is performed.

According to an eleventh aspect, a wireless communication system is provided. The wireless communication system includes the communication apparatus in the sixth aspect or the seventh aspect.

For technical effects of the technical solutions in the sixth aspect to the eleventh aspect, refer to descriptions of corresponding technical effects in the first aspect to the fifth aspect. Details are not described again.

### BRIEF DESCRIPTION OF DRAWINGS

FIG. 1 is a diagram of a protocol stack of a 5G mobile network;
FIG. 2 is a schematic flowchart of a signaling transmission method 200 according to this application;
FIG. 3 is a diagram of a protocol stack of an end-to-end trustworthiness control plane protocol;
FIG. 4 is a diagram of a trustworthiness control plane protocol stack of an access network;
FIG. 5 is a diagram of a trustworthiness control plane protocol stack of a core network;
FIG. 6 is a schematic flowchart of management of a trustworthiness capability according to this application;
FIG. 7 is a diagram of a procedure of subscription to trustworthiness information according to this application;
FIG. 8 is a schematic flowchart of generating a trustworthiness policy by a receiver;
FIG. 9 is a schematic flowchart of generating a trustworthiness policy by a requester;
FIG. 10 is a schematic flowchart of a trustworthiness service according to this application;
FIG. 11 is a schematic flowchart of a data transmission method 300 according to this application;
FIG. 12 is a schematic flowchart of a data transmission method 400 according to this application;
FIG. 13 is a schematic flowchart of transmission of trustworthiness data;
FIG. 14 is a diagram of an end-to-end trustworthiness service plane protocol stack;
FIG. 15 is a diagram of a trustworthiness service plane protocol stack of an access network;
FIG. 16 is a diagram of a trustworthiness service plane protocol stack of a core network;
FIG. 17 is a diagram of a trustworthiness service plane data flow;
FIG. 18 is a schematic flowchart of a communication method 500 according to this application;
FIG. 19 is a diagram of a structure of a communication apparatus 1000 according to this application; and
FIG. 20 is a diagram of a structure of another communication apparatus 1100 according to this application.

### DESCRIPTION OF EMBODIMENTS

The following describes technical solutions in embodiments of this application with reference to accompanying drawings.

For ease of understanding the technical solutions of this application, related technical concepts in embodiments of this application are described.

Existing network communication protocols may be roughly classified into two types: protocols responsible for a connection, for example, a physical (physical, PHY) layer, medium access control (medium access control, MAC), radio link control (radio link control, RLC), a packet data convergence protocol (packet data convergence protocol, PDCP), an internet protocol (internet protocol, IP), a stream control transmission protocol (stream control transmission protocol, SCTP), and a transmission control protocol (transmission control protocol, TCP); and protocols responsible for communication, for example, radio resource control (radio resource control, RRC), a non-access layer (non-access stratum, NAS), an Xn application protocol (Xn application protocol, XnAP), an NG application protocol (NG application protocol, NGAP), and a service data adaptation layer (service data adaption protocol, SDAP). Xn represents an Xn interface, and supports message exchange between a gNB and an NG-eNB. The NG interface is an interface between the gNB or the NG-eNB and a 5G core network.

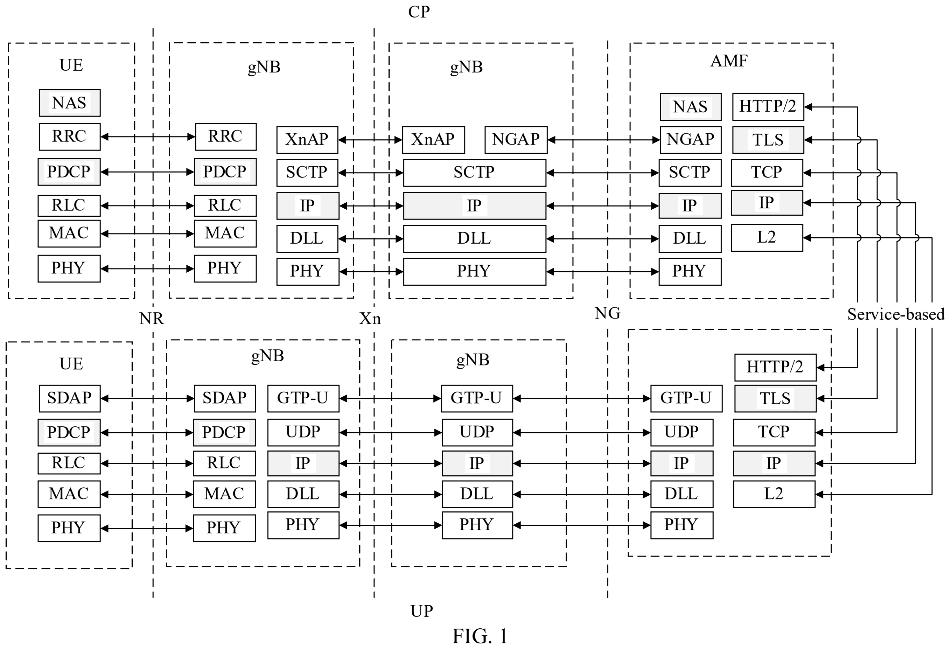

FIG. 1 is a diagram of a protocol stack of a 5G mobile network. As shown in FIG. 1, a marked protocol layer (for example, a protocol layer filled in gray) in the protocol stack has a security function. For example, a NAS protocol supports security algorithm selection, authentication and authorization performed by a core network on user equipment (user equipment, UE), and encryption/decryption and integrity protection of a message between the core network and the UE. A PDCP protocol supports encryption/decryption and integrity protection functions for an air interface message. An internet protocol security (internet protocol security, IPsec) supports encryption/decryption and integrity protection functions between a base station and a network function (network function, NF) of the core network. A transport layer security (transport layer security, TLS) protocol supports authentication, encryption/decryption, and integrity protection functions between NFs of the core network.

It can be learned from FIG. 1 that, security functions are distributed in a plurality of protocols, and no protocol specifically supports the security function. In addition, there are a small quantity of types of security functions, and the security functions supported by the foregoing protocol layers mainly include the encryption/decryption and the integrity protection.

Based on the foregoing technical status, this application provides a signaling transmission method and a data transmission method, to resolve a problem that a security function is closely coupled to a communication protocol in an existing mobile network and does not have an independent upgrade and update capability. In addition, a protocol related to a security function (referred to as a trustworthiness protocol or a security protocol in this application) proposed in this application may support a plurality of security technologies and management of the security technologies.

It should be noted that names of network elements, names of protocol layers, names of data units corresponding to some protocol layers, names of interfaces between the network elements, and the like in this application are merely used as examples. In a future communication network, for the names of the network elements, the names of the protocol layers, the names of the data units corresponding to the protocol layers, the names of the interfaces between the network elements, and the like, other names may be used. The other names shall fall within the technical scope of this application provided that they have same or similar functions and achieve same or similar technical objectives. For example, in a 5G network, a network function may be represented as an NF, a terminal device may also be referred to as UE, a medium access control layer may be represented as a MAC layer, a protocol data unit may be represented as a PDU, and a service data unit may be represented as an SDU. In a 6G network, for the foregoing names, new names may be used.

For brevity of description, the following embodiments describe network elements, protocol layers, data units corresponding to some protocol layers, and the like by using some abbreviations as examples. However, the abbreviations are merely examples, and may be replaced with other abbreviations or names. This is not limited.

The following describes the technical solutions provided in this application.

This application provides a trustworthiness protocol and protocol stack of a communication network, including a trustworthiness control plane protocol and protocol stack, and a trustworthiness service plane protocol and protocol stack. In the trustworthiness control plane protocol stack, a specific security function is performed, and based on the trustworthiness service plane protocol, transmission of trustworthiness data is performed. In addition, in this application, some existing communication protocols are improved. For example, security functions are enhanced for protocols that originally have security functions, such as a PDCP protocol, an IP protocol, and a TLS protocol. Security functions are newly added to underlying connection protocols.

The trustworthiness protocol and protocol stack provided in this application are applicable to a scenario in which a security function and a communication function are independent of each other in a future communication network. It should be understood that the UE, the access network device, the NF of the core network, and the like in the communication network each have a security function. Therefore, the trustworthiness protocol and protocol stack provided in this application need to be deployed on the UE, the access network device, and the NF of the core network. In other words, the trustworthiness protocol and protocol stack provided in this application need to be deployed on a communication node having a corresponding security function, to support the trustworthiness protocol and protocol stack.

For an existing control plane and user plane, and a data plane, a computing plane, an intelligent plane, a task plane, and the like that may be newly added to the future communication network, or in a case in which a security function is newly added to the existing control plane and user plane but no function plane is newly added (that is, a security function is newly added to or integrated into the existing control plane and user plane), the trustworthiness protocol provided in this application provides security support for these planes. Two solutions may be included.

(1) The foregoing planes (for example, an original control plane and user plane, a newly added function plane, or a control plane/user plane to which a security function is newly added) invoke the trustworthiness protocol, to implement a corresponding security function, for example, encryption/decryption and integrity protection.

(2) The foregoing planes retain original security functions of the planes, and the trustworthiness protocol provides a newly added or upgraded security function for the planes. Optionally, the trustworthiness protocol may further provide trustworthiness support for these planes or communication nodes, for example, allocate a key to original security functions of these planes or communication nodes. Encryption and integrity protection are used as an example. After completing measurement and authentication, a trustworthiness control plane (that is, a control plane to which a security function is newly added) generates an encryption key and an integrity protection key between the UE and the core network, an encryption key and an integrity protection key between the UE and an access network, and the like, and allocates the encryption keys and the integrity protection keys to another plane or communication node, and the plane or the communication node performs encryption and integrity protection operations.

To implement independence between security and communication, a possible solution is to deploy a dedicated security module for a communication node on which a trustworthiness protocol and protocol stack are deployed, for example, the UE, the access network device, or the NF of the core network. In this case, the trustworthiness protocol runs on the security module. Details are described in the following embodiments.

Protocol layers in the following embodiments of this application and the accompanying drawings corresponding to the embodiments are described by using names of these protocol layers in an existing communication network as an example. Optionally, these protocol layers may have other names in the future communication network. This is not limited. In other words, these protocol layers may have a function defined in the current communication network, or may be an evolved version of an existing protocol layer.

The following separately describes the trustworthiness control plane protocol and protocol stack, the trustworthiness service plane protocol and protocol stack, and improvements to some existing protocols provided in this application.

### 1. Trustworthiness control plane protocol and protocol stack.

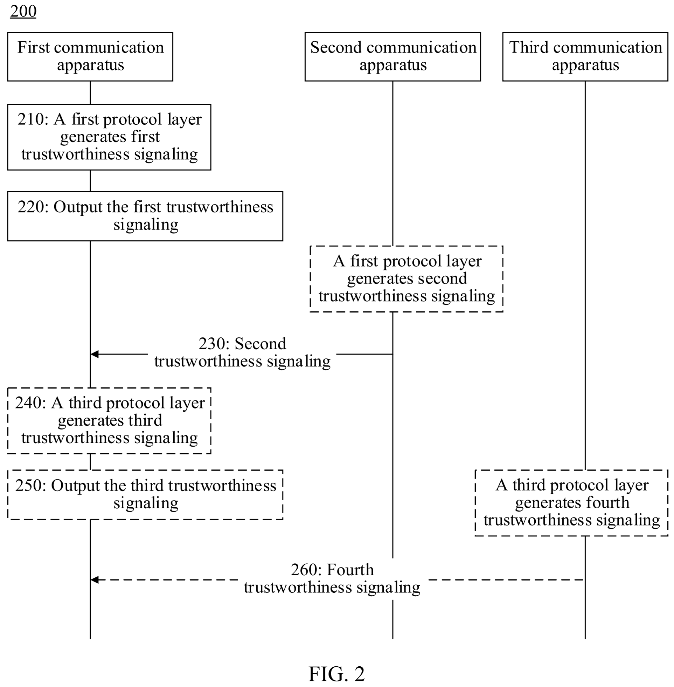

FIG. 2 is a schematic flowchart of a signaling transmission method 200 according to this application. The method 200 is applied to a first communication apparatus. The first communication apparatus includes a first protocol layer and a second protocol layer below the first protocol layer. The second protocol layer includes a part or all of the following protocol layers: a protocol layer for data processing, a protocol layer for transmission, a protocol layer for establishing a connection, and a protocol layer for establishing a channel.

For example, the first protocol layer is a trustworthiness control plane protocol layer proposed in this application, and the first protocol layer may be above the second protocol layer. Optionally, based on different first communication apparatuses (or communication nodes), the second protocol layer deployed on the first communication apparatus may include a part or all of the following protocol layers: a protocol layer for data processing, a protocol layer for transmission, a protocol layer for establishing a connection, a protocol layer for establishing a channel, and the like. For example, if the first communication apparatus is UE, a second protocol layer deployed on the UE may include one or more of protocol layers such as a PDCP layer, an RLC layer, a MAC layer, a PHY layer, and an SDAP layer and possible future evolved versions of these protocol layers. If the first communication apparatus is an access network device (for example, a gNB), a second protocol layer deployed on the access network device may include protocol layers such as a PDCP layer, an RLC layer, a MAC layer, a PHY layer, an IP layer, a data link layer (data link layer, DLL) layer, an SCTP layer, and a user datagram protocol (user datagram protocol, UDP) layer, and one or more of possible future evolved versions of these protocol layers. If the first communication apparatus is an NF of a core network, a second protocol layer deployed on the NF may include one or more of protocol layers such as an IP layer, a DLL layer, an SCTP layer, a UDP layer, a TCP layer, a TLS layer, and a hypertext transfer protocol (hypertext transfer protocol, HTTP) layer, and one or more of possible future evolved versions of these protocol layers.

Based on different first communication apparatuses, the first protocol layer may be classified into a TUPR, a TUCP, a TRRP, a TRCP, or a TCCP. For example, T represents trustworthiness (trustworthiness), and may include trust (trust) and security (security), U represents UE, R represents a RAN, C represents a CN, and P represents a protocol (protocol). Therefore, the TURP is used to transmit trustworthiness signaling between the UE and a RAN node, the TUCP is used to transmit trustworthiness signaling between the UE and the CN, and so on. It should be understood that names of these protocols are merely used as examples, to distinguish between trustworthiness control plane protocols for transmission of trustworthiness signaling between different communication nodes. Other names may be used for these protocols. This is not limited. The RAN node in this application may include a gNB and an eNB in a 5G network, and may further include a RAN node in another mobile network.

For example, the TURP protocol is used to transmit trustworthiness signaling between the UE and the RAN node, and has one or more of the following functions:
establishment, configuration, maintenance, and release of a trustworthiness signaling radio bearer (trustworthiness signaling radio bearer, trustworthiness SRB) and a trustworthiness data radio bearer (trustworthiness data radio bearer, trustworthiness DRB);
awareness, registration, or deregistration of a trustworthiness capability of the UE;
configuration, modification, activation, or deletion of a trustworthiness capability of the UE;
processing of a wireless trustworthiness bearer during handover;
processing of a wireless trustworthiness bearer during session reestablishment;
parsing and transmission of a TUCP message to the core network (a TUCP message from the UE to the core network) or the UE (a TUCP message from the core network to the UE);
a QoS management function based on a trustworthiness bearer;
security negotiation between the UE and the RAN node, for example, security policy negotiation and key agreement;
subscription to trustworthiness information between the UE and the RAN node, where the trustworthiness information may include but is not limited to information such as a security requirement, a security capability, a security policy (which refers to a security policy between the UE and the RAN node herein), and a network-wide trustworthiness policy;
authentication and authorization of the UE and the RAN node, including identity authentication for secure access, for example, obtaining of an authentication vector and an authentication parameter;
authorization of the UE and the RAN node, including static authorization and token (token) information-based authorization;
trustworthiness measurement of the UE and the RAN node, including device trustworthiness measurement, for example, obtaining of a trustworthiness attestation vector and a trustworthiness attestation parameter;
blockchain control of the RAN node for the UE, for example, blockchain creation, blockchain update, blockchain/chain node management, blockchain capability deployment, capability discovery, capability activation, a running parameter, chain node identity management, dynamic node joining, and dynamic node exiting;
situational awareness control of the RAN node for the UE, for example, providing configuration information for situational awareness data and indicating a parameter that needs to be obtained for situational awareness; or
homomorphic control of the RAN node for the UE, for example, key agreement and task configuration.

Optionally, the trustworthiness signaling radio bearer and the trustworthiness data radio bearer may also be collectively referred to as a trustworthiness bearer. In embodiments of this application, the trustworthiness bearer is a bearer (bearer) for trustworthiness signaling and/or trustworthiness data, and is different from a connection-related SRB and a connection-related DRB.

For example, the TUCP protocol is used to transmit trustworthiness signaling between the UE and the CN, and has one or more of the following functions:
awareness, registration, or deregistration of a trustworthiness capability of the UE;
configuration, modification, activation, and deletion of a trustworthiness capability of the UE;
security negotiation between the UE and the CN, for example, security policy negotiation and key agreement;
subscription to trustworthiness information between the UE and the CN, where the trustworthiness information may include but is not limited to information such as a security requirement, a security capability, a security policy (which refers to a trustworthiness policy between the UE and the NF of the CN herein), and a network-wide trustworthiness policy;
authentication and authorization of the UE and the CN, including identity authentication for secure access, for example, obtaining of an authentication vector and an authentication parameter;
encryption and integrity protection of trustworthiness signaling between the UE and the CN;
authorization of the UE and the CN, including static authorization, token-based authorization, and the like;
trustworthiness measurement of the UE and the CN, including device trustworthiness measurement, for example, obtaining of a trustworthiness attestation vector and a trustworthiness attestation parameter;
blockchain control of the CN for the UE, for example, blockchain creation, blockchain update, blockchain/chain node management, blockchain capability deployment, capability discovery, capability activation, a running parameter, chain node identity management, dynamic node joining, and dynamic node exiting;
situational awareness control of the CN for the UE, for example, configuration of situational awareness data and indicating a parameter that needs to be obtained for situational awareness; or
homomorphic control of the CN for the UE, for example, key agreement and task configuration.

For example, the TRRP protocol is used to transmit trustworthiness signaling between RAN nodes, and has one or more of the following functions:
awareness, registration, or deregistration of a trustworthiness capability of the RAN node;
configuration, modification, activation, and deletion of a trustworthiness capability of the RAN node;
security negotiation between the RAN nodes, for example, security policy negotiation and key agreement;
subscription to trustworthiness information between the RAN nodes, where the trustworthiness information may include but is not limited to information such as a security requirement, a security capability, a security policy (which refers to a security policy between two RAN nodes herein), and a network-wide trustworthiness policy;
authentication and authorization of the RAN nodes, including identity authentication for secure access, for example, obtaining of an authentication vector and an authentication parameter;
authorization of the RAN nodes, including static authorization, token-based authorization, and the like;
trustworthiness measurement of the RAN nodes, including device trustworthiness measurement, for example, obtaining of a trustworthiness attestation vector and a trustworthiness attestation parameter;
blockchain control of the RAN node for the RAN node, for example, blockchain creation, blockchain update, blockchain/chain node management, blockchain capability deployment, capability discovery, capability activation, a running parameter, chain node identity management, dynamic node joining, and dynamic node exiting;
situational awareness control of the RAN node for the RAN node, for example, providing configuration information for situational awareness data and indicating a parameter that needs to be obtained for situational awareness; or
homomorphic control of the RAN node for the RAN node, for example, key agreement and task configuration.

For example, the TRCP protocol is used to transmit trustworthiness signaling between the RAN node and the CN, and has one or more of the following functions:
awareness, registration, or deregistration of a trustworthiness capability of the RAN node;
configuration, modification, activation, and deletion of a trustworthiness capability of the RAN node;
security negotiation between the RAN node and the CN, for example, security policy negotiation and key agreement;
subscription to trustworthiness information between the RAN node and the CN, where the trustworthiness information includes but is not limited to a security requirement, a security capability, a security policy (which refers to a security policy between the RAN node and the NF of the CN herein), a network-wide trustworthiness policy, and the like;
authentication and authorization of the RAN node and the CN, including identity authentication for secure access, for example, obtaining of an authentication vector and an authentication parameter;
authorization of the RAN node and the CN, including static authorization, token-based authorization, and the like;
trustworthiness measurement of the RAN node and the CN, including device trustworthiness measurement, for example, obtaining of a trustworthiness attestation vector and a trustworthiness attestation parameter;
blockchain control of the CN for the RAN node, for example, blockchain creation, blockchain update, blockchain/chain node management, blockchain capability deployment, capability discovery, capability activation, a running parameter, chain node identity management, dynamic node joining, and dynamic node exiting;
situational awareness control of the CN for the RAN node, for example, providing configuration information for situational awareness data and indicating a parameter type that needs to be obtained for situational awareness; or
homomorphic control of the CN for the RAN node, for example, key agreement and task configuration.

For example, the TCCP protocol is used to transmit trustworthiness signaling between NFs of the core network, and has one or more of the following functions:
awareness, registration, or deregistration of a trustworthiness capability of the NF;
configuration, modification, activation, and deletion of a trustworthiness capability of the NF;
security negotiation between the NFs, for example, security policy negotiation and key agreement;
subscription to trustworthiness information between the NFs, where the trustworthiness information includes but is not limited to information such as a security requirement, a security capability, a security policy (which refers to a security policy between the NFs of the CN herein), and a network-wide trustworthiness policy;
authentication and authorization of the NF, including identity authentication for secure access, for example, obtaining of an authentication vector and an authentication parameter;
authorization of the NF, including static authorization and token-based authorization;
trustworthiness measurement of the NF, including device trustworthiness measurement, for example, obtaining of a trustworthiness attestation vector and a trustworthiness attestation parameter;
blockchain control of the NF for another NF, for example, blockchain creation, blockchain update, blockchain/chain node management, blockchain capability deployment, capability discovery, capability activation, a running parameter, chain node identity management, dynamic node joining, and dynamic node exiting;
situational awareness control of the NF node for another NF, for example, providing configuration information for situational awareness data and indicating a parameter that needs to be obtained for situational awareness; or
homomorphic control of the NF for another NF, for example, key agreement and task configuration.

In the function descriptions of the foregoing protocols (such as the TURP, the TUCP, the TRRP, the TRCP, and the TCCP), a trustworthiness policy between two communication nodes and a network-wide trustworthiness policy are involved. The trustworthiness policy obtained through negotiation between the two communication nodes is mainly used to determine a security algorithm to be used for signaling transmission between the two communication nodes. The network-wide trustworthiness policy is a policy generated from a global perspective of the network, and is used to configure, manage, or control trustworthiness functions of a part or all of communication nodes in the network. For example, the policy may be generated based on a technology such as situational awareness, AI, or machine learning (machine learning, ML).

In the foregoing protocols, optionally, the TUCP may support encryption/decryption and integrity protection functions for trustworthiness signaling, but another TURP, TRRP, TRCP, and TCCP may not support the functions. Because the TUCP is used to transmit trustworthiness signaling between the UE and the CN, and the trustworthiness signaling needs to be forwarded by the RAN node, encryption/decryption needs to be separately set to make the trustworthiness signaling transparent to the RAN node. The TURP, the TRRP, the TRCP, and the TCCP are protocols for direct transmission between two communication nodes, and do not involve intermediate communication nodes. Encryption/decryption and integrity protection of a message may be completed by using an underlying protocol, for example, the PDCP, the IP, or the TLS.

210: The first communication apparatus generates first trustworthiness signaling at the first protocol layer, where the first trustworthiness signaling is used for one or more functions: management of a trustworthiness function, subscription to trustworthiness signaling, negotiation of a trustworthiness policy, or a request for a trustworthiness service.

Based on a specific implementation of the first communication apparatus, there may be a plurality of possible implementation scenarios in step 210.

For example, if the first communication apparatus is UE, the first protocol layer may be a TURP protocol layer. In this case, the first trustworthiness signaling is trustworthiness signaling to be sent to a RAN node. If the first protocol layer is a TUCP protocol layer, the first trustworthiness signaling is trustworthiness signaling to be sent to a CN (which may be specifically an NF of the CN).

For example, if the first communication apparatus is an access network device, the first protocol layer may be a TURP protocol layer. In this case, the first trustworthiness signaling is trustworthiness signaling to be sent to UE. If the first protocol layer is a TRRP protocol layer, the first trustworthiness signaling is trustworthiness signaling to be sent to a RAN node other than the first communication apparatus. If the first protocol layer is a TRCP protocol layer, the first trustworthiness signaling is trustworthiness signaling to be sent to a CN.

For example, if the first communication apparatus is an NF of a CN, the first protocol layer may be a TUCP protocol layer. In this case, the first trustworthiness signaling is trustworthiness signaling to be sent to UE. If the first protocol layer is a TRCP protocol layer, the first trustworthiness signaling is trustworthiness signaling to be sent to a RAN node. If the first protocol layer is a TCCP protocol layer, the first trustworthiness signaling is trustworthiness signaling to be sent to an NF of a CN.

220: The first communication apparatus outputs the first trustworthiness signaling.

Based on the foregoing descriptions of the trustworthiness protocols of different communication nodes, the following provides a protocol stack of an end-to-end trustworthiness control plane protocol.

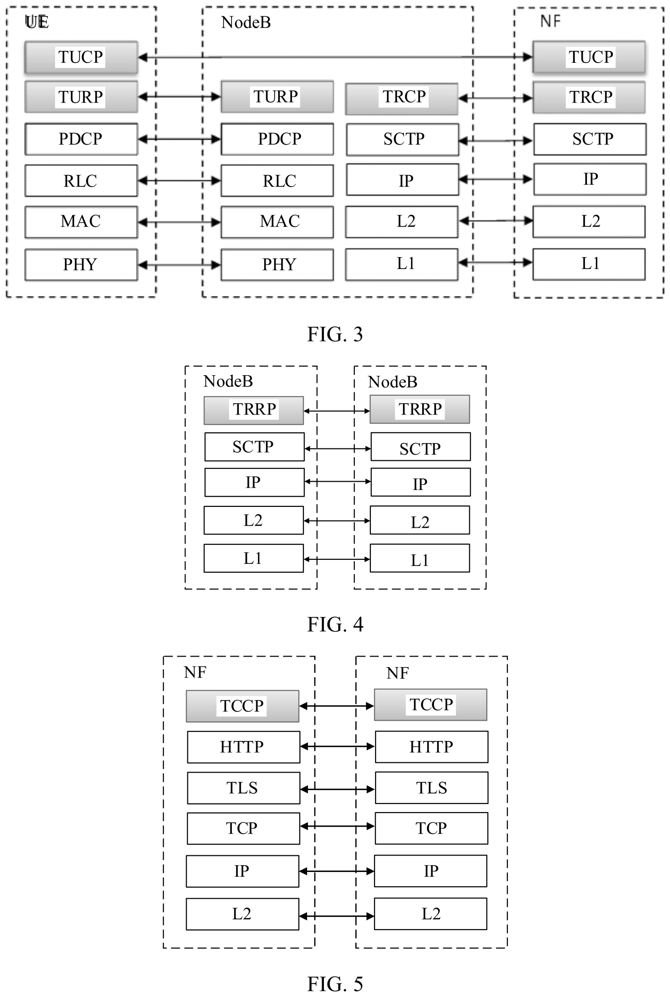

FIG. 3 is a diagram of the end-to-end trustworthiness control plane protocol stack. As shown in FIG. 3, trustworthiness signaling is transmitted between UE and a CN through a TUCP protocol layer, and an access network transparently transmits the trustworthiness signaling between the UE and the CN. The trustworthiness signaling is transmitted between the UE and the access network through a TURP protocol layer. The trustworthiness signaling is transmitted between the access network and an NF of the core network through a TRCP protocol layer.

FIG. 4 is a diagram of a trustworthiness control plane protocol stack of an access network. As shown in FIG. 4, trustworthiness signaling is transmitted between RAN nodes through a TRRP protocol layer.

FIG. 5 is a diagram of a trustworthiness control plane protocol stack of a core network. As shown in FIG. 5, trustworthiness signaling is transmitted between NFs of a CN through a TCCP protocol layer.

For a function of the first trustworthiness signaling transmitted between the different communication nodes, refer to the foregoing descriptions. Details are not described herein again.

Optionally, in step 220, that the first communication apparatus outputs the first trustworthiness signaling includes: The first communication apparatus sends the first trustworthiness signaling to a second communication apparatus. The method 200 further includes step 230.

230: The first communication apparatus receives second trustworthiness signaling from the second communication apparatus.

It should be understood that the second trustworthiness signaling is a response to the first trustworthiness signaling that is fed back by the second communication apparatus.

The following describes procedures of the management of the trustworthiness capability, the subscription to the trustworthiness information, the negotiation of the trustworthiness policy, and the request for the trustworthiness service by using examples.

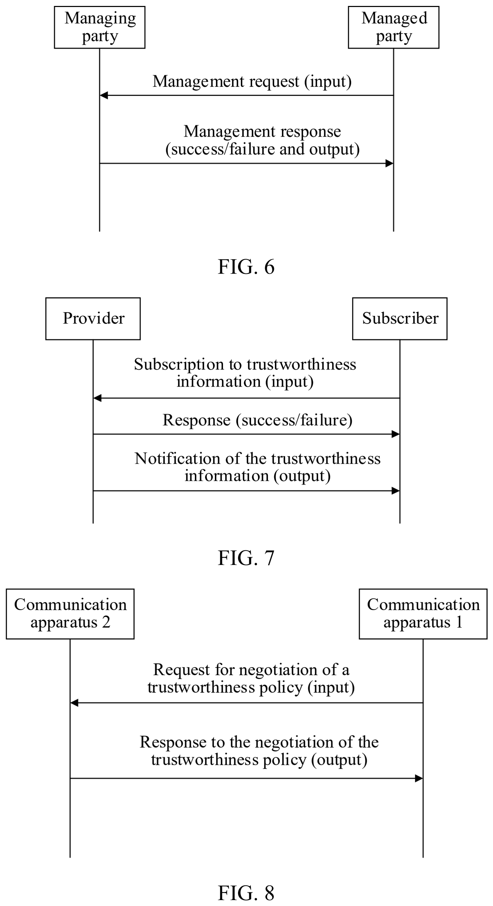

FIG. 6 is a schematic flowchart of management of a trustworthiness capability according to this application. As shown in FIG. 6, a procedure of the management of the trustworthiness capability includes a managing party and a managed party. The managing party may be any network element in UE, a RAN node, and an NF of a CN, and the managed party may be UE or a RAN node. A management type of the management of the trustworthiness capability may include one or more of the following: establishment, activation, initial configuration, update, or the like of a trustworthiness function, and the update may include addition, deletion, state conversion, or the like of the trustworthiness function.

In some possible implementations, the trustworthiness function may include states such as configured (configured), disable (disable), locked (locked), and terminated (terminated). The trustworthiness function may be switched from one state to another state through a management process (for example, establishment, activation, or update). A corresponding operation may be performed based on the state of the trustworthiness function. For example, the trustworthiness function can be invoked only in the configured state, cannot be invoked or updated in the locked state, and cannot be invoked or updated in the disable state. Setting the state of the trustworthiness function is an optional operation. In addition, the operations that are allowed/not allowed to be performed in different states and that are described herein are merely examples, and may alternatively be other designs. This is not limited.

The managed party sends a management request (management request) to the managing party, where the management request is used to request the management of the trustworthiness capability. The managing party sends a management response (management response) to the managed party based on the management request. For example, the management request may carry input information, and the input information may include configuration information (a profile) of a requested trustworthiness capability, for example, one or more pieces of information such as an identifier (identifier, ID)/internet protocol (internet protocol, IP) of the trustworthiness function, an ID/IP of a node corresponding to the trustworthiness function, a list of trustworthiness functions, a state of the trustworthiness function, and a lifecycle. The management response may carry output information, where the output information includes a result corresponding to the management request. For example, if the managing party rejects the management request, the output information may include a failure indication, and optionally, may further include a failure cause value. If the managing party accepts the management request, the output information may include a success indication, and optionally, may further include information related to the trustworthiness capability provided by the managing party.

FIG. 7 is a diagram of a procedure of subscription to trustworthiness information according to this application. As shown in FIG. 7, both a subscriber and a provider of the trustworthiness information may be UE, a RAN node, or an NF of a core network. The subscriber sends a subscription request for the trustworthiness information (which may be represented as, for example, a trustworthiness information subscribe request) to the provider. The subscription request is used to request the subscription to the trustworthiness information, and the subscription request carries subscription-related information, for example, a subscribed network element. The provider sends a response of the trustworthiness information (which may be represented as, for example, a trustworthiness information response) to the subscriber based on the subscription request. The response indicates that the subscription is rejected or accepted. Optionally, if the subscription is rejected, the response may carry a failure indication, and optionally, may further carry information such as a rejection cause value. If the subscription is accepted, when the subscribed trustworthiness information changes, the provider sends a notification of the trustworthiness information (which may be represented as, for example, trustworthiness information notify) to the subscriber. The notification is used to notify the subscriber of the change of the trustworthiness information, and may carry output information, for example, changed trustworthiness information.

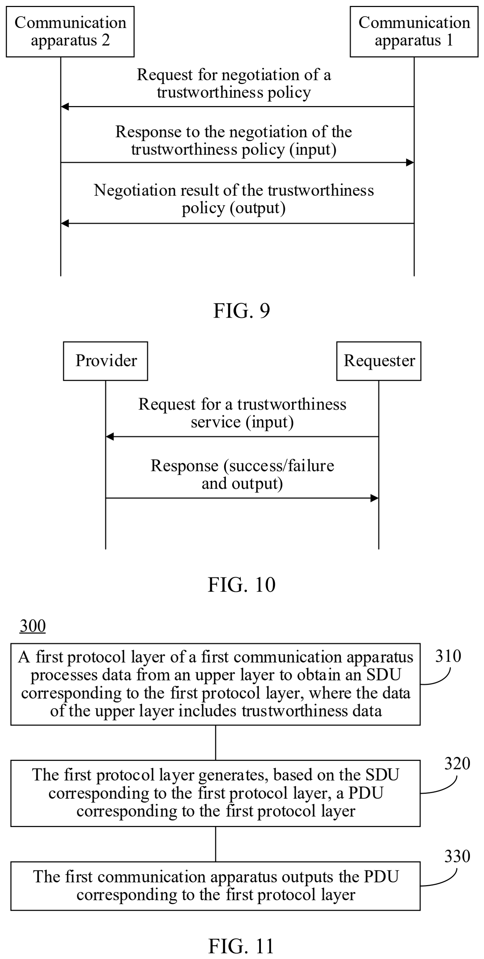

A procedure of the negotiation of the trustworthiness policy between communication nodes may be shown in FIG. 8 or FIG. 9. Negotiation parties may be a UE, a RAN node, or an NF of a CN. A negotiation result is to generate a trustworthiness policy, and a parameter needs to be input to generate the trustworthiness policy.

FIG. 8 is a schematic flowchart of a method for generating a trustworthiness policy. A communication apparatus 1 sends a request for the negotiation of the trustworthiness policy (which may be represented as, for example, a trustworthiness policy negotiation request) to a second communication apparatus 2, where the request carries an input parameter. The communication apparatus 2 sends a response to the negotiation of the trustworthiness policy (which may be represented as, for example, trustworthiness policy negotiation response) to the communication apparatus 1 based on the request for the negotiation of the trustworthiness policy, where the response carries output information. Optionally, if the negotiation succeeds, the output information may include one or more of a success indication, the trustworthiness policy, or the like. If the negotiation fails, the output information may include one or more of a failure indication, a failure cause, or the like.

FIG. 9 is a schematic flowchart of another method for generating a trustworthiness policy. A communication apparatus 1 sends a request for the negotiation of the trustworthiness policy to a communication apparatus 2, and the communication apparatus 2 sends a response to the negotiation of the trustworthiness policy to the communication apparatus 1 based on the request, where the response carries an input parameter. The communication apparatus 1 sends a result of the negotiation of the trustworthiness policy (which may be represented as, for example, a trustworthiness policy negotiation result) to the communication apparatus 2 based on the response. Optionally, if the negotiation succeeds, the result of the negotiation of the trustworthiness policy may include one or more of a success indication, a negotiated trustworthiness policy, or the like. If the negotiation fails, the result of the negotiation of the trustworthiness policy may include one or more of a failure indication, a failure cause, or the like.

FIG. 10 is a schematic flowchart of a trustworthiness service according to this application. As shown in FIG. 10, a requester and a provider of the trustworthiness service may be UE, a RAN node, or an NF of a core network. Optionally, the trustworthiness service may include one or more of the following:
an authentication service, where the provider provides an authentication response/authentication result to the requester;
an authorization service, where the provider provides an authorization token (access token)/authorization result to the requester; or
a trustworthiness measurement service, where the provider provides measurement evidence (where the provider serves as an attester attester)/a measurement result (where the provider serves as a verifier verifier) to the requester.

For example, when the provider of the trustworthiness service is UE, a RAN node, or an NF of a core network, and the requester is an NF of the core network or a RAN node (for example, when a function of the RAN node in a future communication network is enhanced), in addition to the foregoing trustworthiness service, the trustworthiness service may further include the following several types:
a blockchain service, where the provider provides a blockchain control capability for the requester, including blockchain creation, blockchain update, and blockchain/chain node management;
a situational awareness service, where the provider provides a situational awareness control capability or a situational awareness result for the requester, including configuration of a parameter category and a parameter type, and extraction of parameter information; and
a trustworthiness measurement service, where the provider provides a trustworthiness measurement reference value for the requester.

When the provider of the trustworthiness service is an NF of a core network (or a RAN node if a capability of the RAN node in a future communication network is enhanced), and the requester is UE, a RAN node, or an NF of the core network, in addition to the foregoing trustworthiness service, the trustworthiness service further includes the following several types:
a network-wide trustworthiness policy service, where the provider provides a network-wide trustworthiness policy for the requester, and the network-wide trustworthiness policy is mainly used as one of input parameters for negotiation of a trustworthiness policy; and
a trustworthiness measurement service, where the provider provides a trustworthiness measurement result for the requester.

The requester of the trustworthiness service sends a request for the trustworthiness service (which may be represented as, for example, a trustworthiness service request) to the provider, where the request carries input information. The provider sends a response to the trustworthiness service (which may be represented as, for example, a trustworthiness service response) to the requester based on the request from the requester and the trustworthiness service that can be provided. The response may carry output information, and the output information may carry a result of the request for the trustworthiness service, for example, an authentication result of the authentication service, an authorization result of the authorization service, a measurement result of the trustworthiness measurement service, and the measurement evidence.

In addition, optionally, the first communication apparatus may further include a third protocol layer, the third protocol layer is above the second protocol layer, and the method 200 further includes the following steps.

240: The third protocol layer of the first communication apparatus generates third trustworthiness signaling, where the third trustworthiness signaling is used for one or more of the following functions:
the management of the trustworthiness function, the subscription of the trustworthiness information, the negotiation of the trustworthiness policy, or the request for the trustworthiness service.

For the foregoing one or more functions corresponding to the third trustworthiness signaling, refer to related descriptions of the foregoing one or more functions corresponding to the first trustworthiness signaling. Details are not described again.

It may be understood that, if the first communication apparatus is UE, a TURP protocol for transmission of trustworthiness signaling between the UE and a RAN node, and a TUCP protocol for transmission of trustworthiness signaling between the UE and an NF of a core network, that is, examples of the first protocol layer and the third protocol layer, may be deployed on the UE. If the first communication apparatus is a RAN node, a TURP protocol for transmission of trustworthiness signaling between the RAN node and UE and a TRRP protocol layer (an example of the third trustworthiness signaling) for transmission of trustworthiness signaling between the RAN node and another RAN node or a TRCP protocol layer (another example of the third trustworthiness signaling) for transmission of trustworthiness signaling between the RAN node and an NF of a core network may be deployed on the RAN. If the first communication apparatus is an NF of a core network, a TUCP protocol for transmission of trustworthiness signaling between the NF of the core network and UE and a TRCP protocol layer (an example of the third trustworthiness signaling) for transmission of trustworthiness signaling between the NF of the core network and a RAN node or a TCCP protocol layer (another example of the third trustworthiness signaling) for transmission of trustworthiness signaling between the NF of the core network and another NF may be deployed on the NF.

In other words, the first protocol layer and the third protocol layer on the first communication apparatus may be respectively for transmission of trustworthiness signaling between different communication nodes.

250: The first communication apparatus outputs the third trustworthiness signaling.

Optionally, that the first communication apparatus outputs the third trustworthiness signaling includes: The first communication apparatus sends the third trustworthiness signaling to a third communication apparatus. The method 200 further includes the following step.

260: The first communication apparatus receives fourth trustworthiness signaling from the third communication apparatus.

The fourth trustworthiness signaling is a response message sent by the third communication apparatus for the third trustworthiness signaling.

In addition, in the foregoing embodiment, because the first trustworthiness signaling is trustworthiness signaling that is generated by the first protocol layer of the first communication apparatus and that is sent to the second communication apparatus, the second trustworthiness signaling is trustworthiness signaling that is generated by a first protocol layer of the second communication apparatus and that is fed back to the first communication apparatus. Similarly, the third trustworthiness signaling is generated by the third protocol layer of the first communication apparatus and sent to the third communication apparatus. Therefore, the fourth trustworthiness signaling may be trustworthiness signaling that is generated by a third protocol layer of the third communication apparatus and that is fed back to the first communication apparatus.

In the foregoing embodiment of the method 200, the first communication apparatus and the second communication apparatus include the following possible combinations:
The first communication apparatus is a terminal apparatus, and the second communication apparatus is an access network apparatus; or
the first communication apparatus is a terminal apparatus, and the second communication apparatus is a core network apparatus; or
the first communication apparatus is an access network apparatus, and the second communication apparatus is a core network apparatus; or
both the first communication apparatus and the second communication apparatus are access network apparatuses; or
both the first communication apparatus and the second communication apparatus are core network apparatuses.

In addition, if the method 200 includes the third communication apparatus, the first communication apparatus, the second communication apparatus, and the third communication apparatus may correspond to the following combinations: a terminal apparatus, an access network apparatus, and a core network apparatus.

The foregoing describes in detail the trustworthiness control plane protocol and protocol stack provided in this application.

### 2. Trustworthiness service plane protocol and protocol stack

FIG. 11 is a schematic flowchart of a data transmission method 300 according to this application. The method 300 is applied to a first communication apparatus. The first communication apparatus includes a first protocol layer and a second protocol layer below the first protocol layer. The second protocol layer includes a part or all of the following protocol layers: a protocol layer for data processing, a protocol layer for transmission, a protocol layer for establishing a connection, and a protocol layer for establishing a channel. For descriptions of the second protocol layer herein, refer to the descriptions of the second protocol layer on the first communication apparatus in the method 200. Details are not described again.

It should be noted that, in the method 300, the first protocol layer deployed on the first communication apparatus is a protocol layer for transmission of trustworthiness data, which is different from the first protocol layer on the first communication apparatus that is for transmission of the trustworthiness signaling in the method 200. For ease of distinguishing, the first protocol layer in the method 200 may be denoted as a protocol layer a, and the first protocol layer in the method 300 may be denoted as a protocol layer b. Alternatively, a trustworthiness control plane protocol layer is denoted as a protocol layer a, and a service plane protocol layer is denoted as a protocol layer b. However, it should be noted that, based on the foregoing descriptions of the trustworthiness control plane protocol layer, it can be learned that, for a communication node, more than one control plane protocol layer, for example, two or more control plane protocol layers, may be deployed on the communication node, and the two or more control plane protocol layers are separately used for transmission of trustworthiness signaling between the control plane protocol layers and different communication nodes. UE is used as an example, and trustworthiness control plane protocol layers deployed on the UE include a TURP and a TUCP. A RAN node is used as an example, and trustworthiness control plane protocol layers deployed on the RAN node include a TURP, a TRRP, and a TRCP. An NF of a core network is used as an example, and trustworthiness control plane protocol layers deployed on the NF of the core network include a TUCP, a TRCP, and a TCCP. These are all specific examples of the protocol layer a. For a trustworthiness service plane protocol, a protocol layer b is deployed on each communication node. For example, the protocol layer b may be referred to as a trustworthiness bearer protocol (trustworthiness bearer protocol, TBP). It should be understood that a name of the protocol layer is merely used as an example, or another name may be used. This is not limited.

In general, a function of a TBP layer mainly includes one or more of functions such as transmission of trustworthiness data (for example, transmission of the trustworthiness data from the first communication apparatus to a second communication apparatus), mapping or reverse mapping of the trustworthiness data to a trustworthiness bearer, routing and forwarding of the trustworthiness data, and processing of the trustworthiness data.

Optionally, the trustworthiness data in this embodiment of this application may include but is not limited to: blockchain-related data, for example, blockchain transaction data/block data; situational awareness-related data; homomorphic encryption-related data, for example, a homomorphic-encrypted ciphertext and a computation result; trustworthiness root management-related data, for example, a certificate trustworthiness root and a symmetric key trustworthiness root; or a key, for example, a key transmitted by the core network to an access network in a symmetric key system.

Optionally, the preprocessing of the trustworthiness data includes one or more of packet assembly, deduplication, redundancy removal, or the like.

Optionally, for the processing of the trustworthiness data, if the trustworthiness data includes the blockchain-related data, the processing of the trustworthiness data may include formatting, de-formatting, and the like of the blockchain-related data; if the trustworthiness data includes the situational awareness-related data, the processing of the trustworthiness data may include situational awareness data classification, information extraction, and the like; or if the trustworthiness data includes the homomorphic encryption-related data, the processing of the trustworthiness data may include cryptographic computation, aggregated computation, and the like. It should be understood that the foregoing processing of the trustworthiness data is merely an example.

310: The first protocol layer (that is, the TBP protocol layer) of the first communication apparatus processes data from an upper layer, to obtain an SDU corresponding to the first protocol layer (that is, the protocol layer b). The data of the upper layer includes trustworthiness data.

320: The first protocol layer of the first communication apparatus maps the SDU corresponding to the first protocol layer to a bearer to obtain a PDU corresponding to the first protocol layer.

The bearer in step 320 is the trustworthiness bearer in this embodiment of this application.

330: The first communication apparatus outputs the PDU corresponding to the first protocol layer.

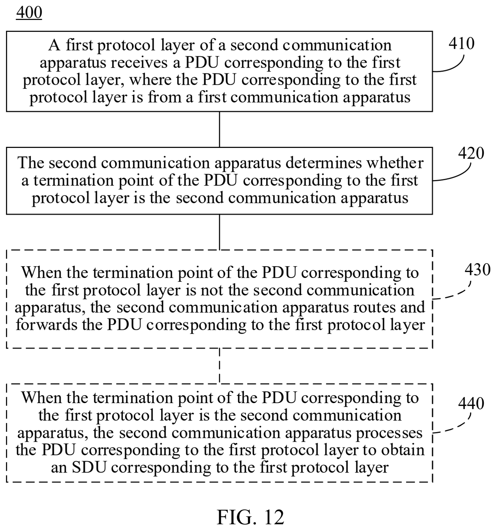

The method 300 may be a method procedure performed by a data transmitting end. For a corresponding method procedure performed by a data receiving end, refer to a procedure shown in FIG. 12.

FIG. 12 is a schematic flowchart of a data transmission method 400 according to this application. The method 400 is applied to a second communication apparatus. The second communication apparatus includes a first protocol layer and a second protocol layer below the first protocol layer. The second protocol layer includes a part or all of the following protocol layers: a protocol layer for user data processing, a protocol layer for transmission, a protocol layer for establishing a connection, and a protocol layer for establishing a channel.

410: The second communication apparatus receives a PDU corresponding to the first protocol layer, where the PDU corresponding to the first protocol layer is from a first communication apparatus. It should be understood that the PDU corresponding to the first protocol layer may be a PDU corresponding to a first protocol layer of the first communication apparatus.

420: The second communication apparatus determines whether a termination point of the PDU corresponding to the first protocol layer is the second communication apparatus.

430: Optionally, when the termination point of the PDU corresponding to the first protocol layer is the second communication apparatus, the second communication apparatus processes the PDU corresponding to the first protocol layer to obtain an SDU corresponding to the first protocol layer.

It should be understood that, in step 430, if it is determined that the termination point of the PDU corresponding to the first protocol layer is the second communication apparatus, the second communication apparatus parses the received PDU corresponding to the first protocol layer to obtain the SDU corresponding to the first protocol layer. In addition, the SDU corresponding to the first protocol layer is obtained by parsing, by the first protocol layer of the second communication apparatus, the PDU corresponding to the first protocol layer.

440: Optionally, when the termination point of the PDU corresponding to the first protocol layer is not the second communication apparatus, the second communication apparatus routes and forwards the PDU corresponding to the first protocol layer.

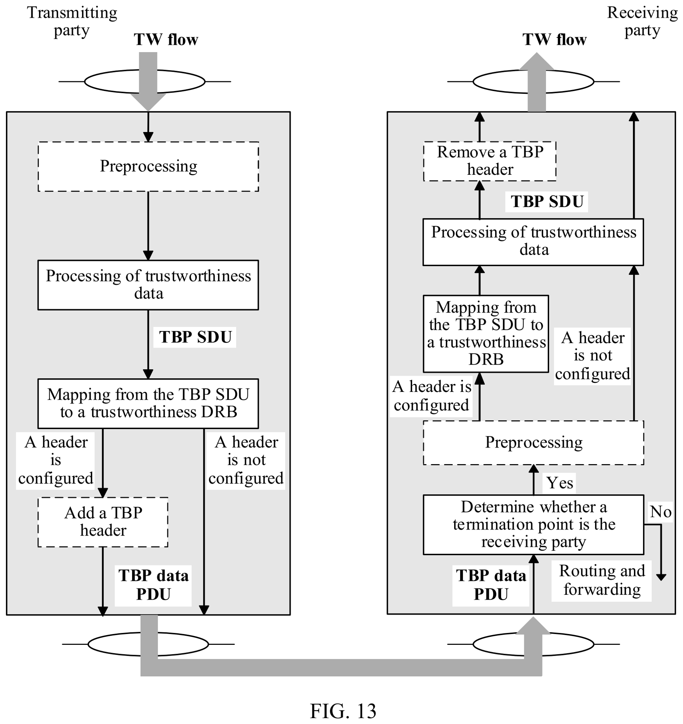

In addition, for trustworthiness data, a first protocol layer of a transmitting end or a first protocol layer of a receiving end may further include some other processing. The following provides descriptions with reference to FIG. 13.

FIG. 13 is a schematic flowchart of transmission of trustworthiness data. As shown in FIG. 13, for a transmitting end, after receiving a data flow (for example, a data flow of the trustworthiness data (trustworthiness flow, TW flow)) from an upper layer, the first protocol layer of the transmitting end performs combination and packet assembly to obtain a data packet. The first protocol layer processes the data packet to obtain a TBP SDU. After the TBP SDU is obtained, if an existing mapping from quality of service (quality of service, QoS) to a trustworthiness bearer (that is, a TRB) is not satisfied, the TBP SDU may be mapped to a default TRB; otherwise, the TBP SDU is mapped to a TRB that meets a condition, the TBP PDU is constructed, the TBP PDU is delivered to a lower layer, and a mapping rule is stored. Optionally, before processing the data packet to obtain the TBP SDU, the first protocol layer may preprocess the data packet, for example, perform deduplication and redundancy removal. After the TBP SDU is obtained, the TBP SDU is mapped to a trustworthiness DRB, to obtain a TBP PDU (which may also be referred to as a TBP data PDU), as shown in a case in which no header is configured in FIG. 13. Optionally, the first protocol layer may configure a header (header) of the first protocol layer for the TBP SDU, and add the header of the first protocol layer to the TBP SDU, to obtain the TBP PDU, as shown in a case in which a header is configured and a TBP header is added in FIG. 13. The first protocol layer of the transmitting end outputs the TBP PDU. For a receiving end, after receiving the TBP PDU from the transmitting end, the receiving end first determines whether the termination point of the TBP PDU is the receiving end. For example, if the transmitting end is UE, the receiving end is a RAN node, and the TBP PDU is trustworthiness data sent by the UE to another RAN node, or if the transmitting end is UE, the receiving end is a RAN node, and the TBP PDU is trustworthiness data sent by the UE to an NF of a core network, the receiving end determines that the termination point of the TBP PDU is not the receiving end. In this case, the receiving end routes and forwards the TBP PDU. If the receiving end determines that the termination point of the TBP PDU is the receiving end, the receiving end performs subsequent processing on the TBP PDU. In general, if the TBP PDU is configured with the TBP header, mapping from the TBP SDU to a TRB is performed, and the TBP header of the TBP PDU is removed, to obtain the TBP SDU; otherwise, the TBP SDU is extracted from the TBP PDU. Subsequent processing of the receiving end may be considered as an inverse operation of corresponding processing of the transmitting end. For example, optionally, the receiving end preprocesses the received TBP PDU. If the TBP PDU is not configured with the header of a TBP layer, the receiving end performs trustworthiness data processing on the TBP PDU, to obtain the TBP SDU. Alternatively, if the TBP PDU is configured with the header of a TBP layer, after the preprocessing is performed, the mapping from the TBP SDU to the trustworthiness bearer is performed based on data obtained through the preprocessing, trustworthiness data processing is performed, and the TBP SDU is obtained by removing the TBP header. The TBP layer delivers the TBP SDU to the upper layer.

Compared with a user plane protocol SDAP in an existing network such as a 5G network, the TBP protocol provided in this application not only supports mapping between a data flow and a bearer, but also supports a security technology that may be newly added in the future, for example, homomorphic encryption. Optionally, a procedure, for example, data preprocessing is further added, to support the processing of the trustworthiness data. For example, when a length of a trustworthiness data packet may exceed a maximum data packet length allowed by an underlying protocol, the trustworthiness data packet is preprocessed first, so that the length of the trustworthiness data packet is not greater than the maximum data packet length allowed by the underlying protocol.

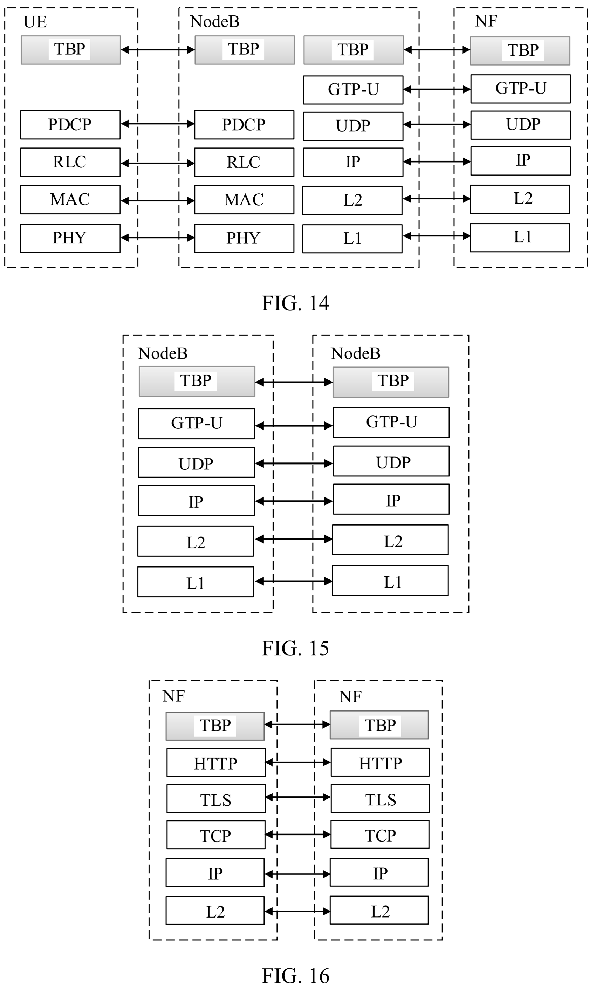

FIG. 14 is a diagram of an end-to-end trustworthiness service plane protocol stack. As shown in FIG. 14, trustworthiness data is transmitted between UE, a RAN node, and an NF of a core network through TBP layers.

FIG. 15 is a diagram of a trustworthiness service plane protocol stack of an access network. As shown in FIG. 15, trustworthiness data is transmitted between RAN nodes through TBP layers.

FIG. 16 is a diagram of a trustworthiness service plane protocol stack of a core network. As shown in FIG. 16, trustworthiness data is transmitted between NFs through TBP layers.

In FIG. 14 to FIG. 16, the TBP layer may run above a second protocol layer of each communication node. For processing of the trustworthiness data by the TBP layer, refer to the descriptions in FIG. 13. After a TBP layer of the transmitting end generates a TBP PDU, the TBP PDU is encapsulated layer by layer by a second protocol layer of the transmitting end, and finally is sent by a physical layer (that is, a PHY layer) of the transmitting end. After the receiving end receives a data packet from the transmitting end, the data packet is decapsulated layer by layer by the second protocol layer to obtain the TBP PDU, and then a TBP layer of the receiving end decapsulates the TBP PDU to obtain a TBP SDU. Transmission of trustworthiness data between UE and a RAN node (for example, a NodeB in FIG. 14) in FIG. 14 is used as an example. A TBP layer of the UE generates a TBP PDU and delivers the TBP PDU to a PDCP layer. The TBP PDU is sent after being sequentially encapsulated by the PDCP layer, an RLC layer, a MAC layer, and a PHY layer of the UE. After the receiving end receives a data packet from the transmitting end, the data packet is sequentially decapsulated by a PHY layer, a MAC layer, an RLC layer, and a PDCP layer to obtain a TBP PDU, and then a TBP layer of the RAN node decapsulates the TBP PDU to obtain a TBP SDU.

Based on the trustworthiness service plane protocol stacks shown in FIG. 14 to FIG. 16 and the function descriptions of the TBP layer of the transmitting end/receiving end in FIG. 13, a person skilled in the art may know how trustworthiness data between any two communication nodes in FIG. 14 to FIG. 16 is processed and transferred at protocol layers of protocol stacks of the communication nodes. Details are not described again.

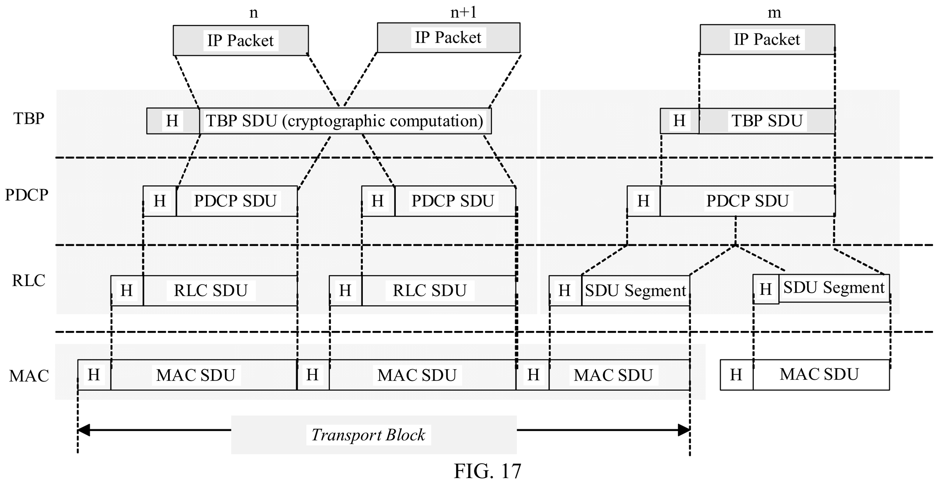

FIG. 17 is a diagram of a trustworthiness service plane data flow. As shown in FIG. 17, for data transmission on a trustworthiness plane in this application, a protocol stack is modified, an SDAP layer is removed, and a TBP layer is newly added. The TBP layer uses input data (trustworthiness data) such as an IP layer data packet to form an input of homomorphic computation and aggregated computation, performs homomorphic computation or aggregated computation, then unpacks output data, and forwards a trustworthiness data packet. After the TBP layer delivers the trustworthiness data packet to a lower layer, a PDCP layer, an RLC layer, and a MAC layer perform corresponding processing, and finally multiplex an output MAC SDU into a TB.

The foregoing describes in detail deployment of the trustworthiness control plane protocol layer and the trustworthiness service plane protocol layer on a communication apparatus. The following further provides some solutions. For a protocol layer that has a trustworthiness function in an existing protocol stack, a new trustworthiness function is added to the protocol layer, or a trustworthiness function of the protocol layer is enhanced.

### 3. Introduction or enhancement of a security function in an existing protocol

This part mainly involves two cases. One case is that for a protocol that originally has a security function, some security functions are newly added in this application on the basis of retaining the original security function. The other case is that for an underlying connection plane protocol that originally does not have a security function, a security function is added to the underlying connection plane protocol in this application, that is, the security function is introduced.

It should be understood that the trustworthiness protocol provided above may be performed based on an underlying protocol (for example, a PDCP, MAC, or RLC). After a trustworthiness protocol is introduced, a function for supporting the trustworthiness protocol needs to be added to the underlying protocol. In addition, if an underlying protocol in a future communication network changes (for example, an underlying protocol layer is replaced with another new protocol layer), the trustworthiness protocol provided in this application may still run at an upper layer.
(1) To support a more advanced encryption algorithm of a future mobile network, this application proposes to add one or more of the following functions to a PDCP layer protocol of an air interface between UE and a base station, an IP layer protocol between base stations, a TLS layer protocol between an NF of a core network and a user plane function (user plane function, UPF)/between NFs, and an IP layer protocol between a base station and an NF of the core network:
   encryption and decryption functions for a quantum-resistant key length; and
   integrity protection and integrity verification functions for a quantum-resistant key length.

After the security function in the protocol (for example, the PDCP, the IP, or the TLS) that originally has the security function in a network element is enhanced, a solution for performing a security function may be implemented by deploying a security module on a communication node.

If the security module is deployed, a function (for example, the functions in the TUCP, the TUCP, the TURP, the TRRP, the TCCP, and the TBP) of the first protocol layer deployed on the communication node (for example, the UE, the RAN node, or the NF of the core network) may be performed by the security module, and non-security-related functions in the PDCP, the IP, the TLS, and the like may be performed by another module of the communication node.

Optionally, there may be two options for an execution solution of the security module.

### Option 1

The security module provides security processing information, for example, a parameter and configuration related to a security function, including a key for encryption/decryption and integrity protection, and a privacy protection identifier. In addition, the security module is responsible for executing a specific security algorithm, for example, functions such as encryption/decryption and integrity protection.

### Option 2

The security module provides a parameter and configuration related to a security function, and a module other than the security module in the communication apparatus executes a specific security algorithm.

It should be understood that, in an embodiment related to a security module, an upper layer message of a physical layer may include a message of the foregoing protocol layer on which a security function needs to be enhanced, for example, the PDCP layer, the IP layer, or the TLS layer. This is not limited.

In general, in Option 1, the security module performs security processing on the upper-layer message of the physical layer based on the security algorithm, to obtain a first message. In Option 2, in addition to the security module, the communication apparatus further includes an execution module (referred to as a first module) of the security algorithm. The security module is responsible for providing security processing information for the first module, where the security processing information includes information required by the first module for performing security processing on the upper-layer message of the physical layer, for example, the foregoing key for encryption/decryption and integrity protection and the privacy protection identifier. The first module performs security processing on the upper-layer message of the physical layer based on the security algorithm and the security processing information, to obtain the first message.

(2) A security function is added to (or introduced into) a connection plane protocol.

For example, to support physical layer security, one or more of the following functions are added to a PHY layer protocol of an air interface between UE and a base station:
derivation, encryption/decryption, and integrity protection of a security key of the physical layer.

To support running of a trustworthiness protocol and independence between a trustworthiness function and another function, a bearer (collectively referred to as a trustworthiness bearer in this specification) for trustworthiness signaling and/or trustworthiness data is added. One or more of the following functions are added to a MAC layer protocol of the air interface between the UE and the base station:
mapping between a logical channel and a transport channel of a trustworthiness message;
multiplexing an SDU of the MAC layer corresponding to a trustworthiness message belonging to one or different logical channels and/or an SDU of the MAC layer corresponding to a connection-related message into a transport block TB; or
processing of scheduling priorities of a bearer of the trustworthiness message and a bearer of the connection-related message.

Optionally, bearers of trustworthiness messages may include a bearer of trustworthiness signaling and a bearer of trustworthiness data. Bearers of connection-related messages include a signaling radio bearer (that is, an SRB) and a data radio bearer (that is, a DRB).

For the foregoing solution of enhancing the existing protocol, the following provides a corresponding method procedure.

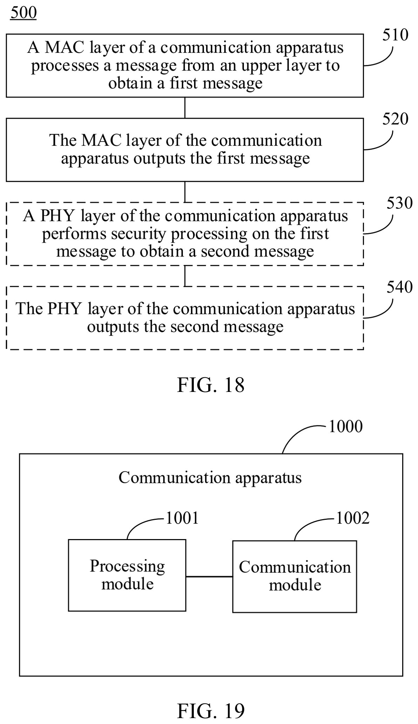

FIG. 18 is a schematic flowchart of a communication method 500 according to this application. The method 500 is applied to a communication apparatus, and the communication apparatus includes a MAC layer.

510: The MAC layer of the communication apparatus processes a message from an upper layer to obtain a first message.

Optionally, the upper-layer message includes a trustworthiness message and/or a connection-related message. In an example, the trustworthiness message includes trustworthiness signaling and/or trustworthiness data, and the connection-related message includes connection signaling and/or connection data.

Optionally, processing of the MAC layer includes one or more of the following:
mapping between a logical channel and a transport channel of a trustworthiness message;
multiplexing an SDU of the MAC layer corresponding to a trustworthiness message belonging to one or different logical channels and/or an SDU of the MAC layer corresponding to a connection-related message into a TB; or
processing of scheduling priorities of a bearer of the trustworthiness message and a bearer of the connection-related message.

520: The MAC layer of the communication apparatus outputs the first message.

The communication apparatus further includes a physical layer. Optionally, that the MAC layer outputs the first message includes: The MAC layer sends the first message to the physical layer. The method 500 further includes the following steps.

530: The physical layer of the communication apparatus performs security processing on the first message to obtain a second message.

The security processing of the physical layer includes: deriving a security key of the physical layer; encrypting the first message based on the security key to obtain a ciphertext; and performing integrity protection processing on the ciphertext to obtain the second message.

Optionally, encryption performed by the physical layer on the first message may alternatively be a physical layer security technology based on coding/precoding. The physical layer security technology based on coding/precoding is a special precoding/coding scheme, and can implement both a precoding/coding function and encryption on the first message. In this implementation, deriving the security key of the physical layer and encrypting the first message based on the security key may be optional steps of the physical layer. In this case, the physical layer processes the first message by using the physical layer security technology based on precoding/coding to obtain the second message.

520: The physical layer of the communication apparatus outputs the second message.

A plurality of security functions are newly added to an underlying protocol. This enhances an existing security function and improves security of signaling transmission/data transmission. This meets a development trend of a future network security technology and facilitates upgrade of a future network security function.

According to the technical solutions provided in this application, a security function can be effectively decoupled from a communication function, to facilitate independent evolution and flexible deployment of the security function. The trustworthiness protocol may provide a plurality of security functions including encryption/decryption, integrity protection, and the like. For example, the trustworthiness protocol includes security procedures such as trustworthiness measurement, a blockchain, and situational awareness that may be supported by a future mobile network. The trustworthiness protocol implements a service-oriented security function, and converts a conventional process of invoking a security function by a node into a process of requesting a security service by the node. This is similar to a case in which different NFs on a core network side provide communication services, and standardizes a request and response procedure of a security service. In addition, the trustworthiness protocol supports hot swap of the security function, and can be selected and configured by a user as required. In addition, this application provides a protocol stack of a communication network after a trustworthiness protocol is newly added.

There are a plurality of disadvantages: Security functions are integrated into a plurality of protocol functions, there is no dedicated security protocol, and the security function is closely coupled with a communication function. Consequently, a plurality of protocols in a plurality of communication nodes need to be modified to upgrade and update the security function, and a workload is heavy and an operation is complex. In addition, a communication standard lacks sufficient considerations on security, has only simple functions such as encryption, integrity protection, authentication and authorization, and the like, and lacks a unified standard procedure for adding, deleting, or changing a security function. In comparison, the technical solutions provided in this application have many advantages.

The foregoing describes in detail the communication method provided in this application. The following describes a communication apparatus provided in this application.

To implement functions of the communication apparatuses in the foregoing method embodiments, the communication apparatus may include a hardware structure and/or a software module, and implement corresponding functions of the communication apparatus in a manner of the hardware structure, the software module, or a combination of the hardware structure and the software module.

FIG. 19 shows a communication apparatus according to this application.

As shown in FIG. 19, the communication apparatus 1000 includes a processing module 1001 and a communication module 1002. The communication apparatus 1000 may be a network element, or an apparatus that is used in a network element and that can perform a method performed by a network element, for example, a chip, a chip system, or a circuit. Optionally, the network element may include a terminal device, an access network device, or a core network device. This is not limited.

The communication module may be a transceiver module, a transceiver, a transceiver machine, a transceiver apparatus, or the like. The processing module may be a processor, a processing board, a processing unit, a processing apparatus, or the like. Optionally, the communication module is configured to perform sending operations and/or receiving operations of the network elements in the foregoing methods. A component that is in the communication module and that is configured to implement a receiving function may be considered as a receiving unit, and a component that is in the communication module and that is configured to implement a sending function may be considered as a sending unit. In other words, the communication module includes the receiving unit and the sending unit.

The communication module and/or the processing module may be implemented by using a virtual module. For example, the processing module may be implemented by using a software functional unit or a virtual apparatus, and the communication module may be implemented by using a software function or a virtual apparatus. Alternatively, the processing module and/or the communication module may be implemented by using a physical apparatus. For example, the communication apparatus is implemented by using a chip, a chip system, or a circuit. In this implementation, the communication module may be an input/output circuit and/or a communication interface, and performs an input operation (corresponding to the receiving operation) and an output operation (corresponding to the sending operation). The processing module is an integrated processor, a microprocessor, an integrated circuit, a logic circuit, or the like.

The module division in the foregoing apparatus embodiment is an example, and is merely logical function division. During actual implementation, there may be another division manner, that is, a division manner different from that in FIG. 19. In addition, when functions of the communication apparatuses in the apparatus embodiments are divided into a plurality of functional modules, the plurality of functional modules may be integrated into one module, or may exist alone physically, or two or more modules are integrated into one module. Optionally, the integrated module may be implemented in a form of hardware, or may be implemented in a form of a software functional module, or may be implemented in a form of hardware plus a software functional module. This is not limited.

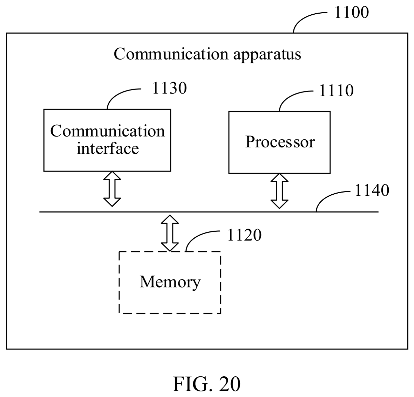

Refer to FIG. 20. This application further provides a communication apparatus 1100.

Optionally, the communication apparatus 1100 may be a chip or a chip system. Optionally, in this application, the chip system may include a chip, or may include a chip and another discrete device.

The communication apparatus 1100 may include at least one processor 1110. Optionally, the processor 1110 is coupled to a memory. The memory may be located in the communication apparatus. Alternatively, the memory may be integrated with the processor. Alternatively, the memory may be located outside the apparatus. For example, the communication apparatus 1100 may further include at least one memory 1120. The memory 1120 stores a computer program, instructions, and/or data necessary for implementing any one of the foregoing examples, and a protocol stack or a protocol layer of a corresponding network element (for example, the terminal apparatus, the access network device, or the NF of the core network) in the foregoing method embodiments. The processor 1110 may execute the computer program, the protocol stack, or the protocol layer stored in the memory 1120, to complete the method performed by the corresponding network element in any one of the foregoing method embodiments.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or another type of communication interface. When the communication apparatus 1100 is a chip-type apparatus or circuit, the communication interface 1130 in the communication apparatus 1100 may alternatively be an input/output circuit, and may input information (also referred to as receiving information) and output information (also referred to as sending information). The processor is an integrated processor, a microprocessor, an integrated circuit, a logic circuit, or the like. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in this application.

Optionally, the processor 1110, the memory 1120, and the communication interface 1130 are connected to each other through a bus 1140. For ease of representation, only one line is used in FIG. 20 for representation, but it does not mean that there is only one bus or one type of bus.

In addition, this application further provides a computer-readable storage medium. The computer-readable storage medium stores computer instructions. When the computer instructions are run on a computer, functions of corresponding network elements (for example, the terminal apparatus, the RAN node, and the NF of the core network) in any one of the foregoing embodiments are implemented.

This application further provides a computer program product. The computer program product includes computer program code. When the computer program code is run on a computer, functions of corresponding network elements (for example, the terminal apparatus, the RAN node, and the NF of the core network) in any one of the foregoing embodiments are implemented.

This application further provides a wireless communication system, including one or more network elements in any one of the foregoing method embodiments. For example, the communication system includes any combination of the terminal, the RAN node, and the NF of the CN in embodiments of this application. Optionally, a quantity of any network elements is not limited to one or more.

In this application, the processor may be a general-purpose processor, a digital signal processor, an application-specific integrated circuit, a field programmable gate array or another programmable logic device, a discrete gate or a transistor logic device, or a discrete hardware component, and may implement or perform methods, steps, and logical block diagrams that are disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store the program instructions and/or the data.

All or some of the technical solutions provided in this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave) manner. The computer-readable storage medium may be any usable medium accessible by the computer, or a data storage device such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

Unless otherwise specified, "a plurality of" means two or more than two. "At least one item (piece) of" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

Unless otherwise specified, "/" in the descriptions of embodiments of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A and B may be singular or plural.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signaling transmission method, applied to a first communication apparatus, wherein the first communication apparatus comprises a first protocol layer and a second protocol layer below the first protocol layer, the second protocol layer comprises a part or all of the following protocol layers: a protocol layer for data packet processing, a protocol layer for transmission, a protocol layer for establishing a connection, and a protocol layer for establishing a channel, and the method comprises:
generating, by the first protocol layer of the first communication apparatus, first trustworthiness signaling, wherein the first trustworthiness signaling is used for one or more of the following functions:
management of a trustworthiness function, subscription to trustworthiness information, negotiation of a trustworthiness policy, or a request for a trustworthiness service; and
outputting, by the first communication apparatus, the first trustworthiness signaling.

2. The method according to claim 1, wherein outputting, by the first communication apparatus, the first trustworthiness signaling comprises:
sending, by the first communication apparatus, the first trustworthiness signaling to a second communication apparatus; and
the method further comprises:
receiving, by the first communication apparatus, second trustworthiness signaling from the second communication apparatus, wherein the second trustworthiness signaling is a response to the first trustworthiness signaling.

3. The method according to claim 1 or 2, wherein the first communication apparatus further comprises a third protocol layer, the third protocol layer is above the second protocol layer, and the method further comprises:
generating, by the third protocol layer of the first communication apparatus, third trustworthiness signaling, wherein the third trustworthiness signaling is used for one or more of the following functions:
the management of the trustworthiness function, the subscription to the trustworthiness information, the negotiation of the trustworthiness policy, or the request for the trustworthiness service; and
outputting, by the first communication apparatus, the third trustworthiness signaling.

4. The method according to claim 3, wherein outputting, by the first communication apparatus, the third trustworthiness signaling comprises:
sending, by the first communication apparatus, the third trustworthiness signaling to a third communication apparatus; and
the method further comprises:
receiving, by the first communication apparatus, fourth trustworthiness signaling from the third communication apparatus, wherein the fourth trustworthiness signaling is a response to the third trustworthiness signaling.

5. The method according to any one of claims 1 to 4, wherein the management of a trustworthiness capability comprises one or more of the following:
establishment of the trustworthiness function;
activation of the trustworthiness function;
initial configuration of the trustworthiness function;
update of the trustworthiness function;
addition of the trustworthiness function;
deletion of the trustworthiness function; or
state transition of the trustworthiness function.

6. The method according to any one of claims 1 to 5, wherein the trustworthiness information comprises one or more of the following:
a trustworthiness requirement;
a trustworthiness capability;
a trustworthiness policy between the first communication apparatus and another communication apparatus, wherein the trustworthiness policy is used by the first communication apparatus to determine a trustworthiness algorithm between the first communication apparatus and the another communication apparatus; or
a network-wide trustworthiness policy, wherein the network-wide trustworthiness policy is used to configure, manage, or control trustworthiness functions of a part or all of communication apparatuses in a network.

7. The method according to any one of claims 1 to 6, wherein the trustworthiness service comprises one or more of the following:
an authentication service;
an authorization service;
a trustworthiness measurement service;
a blockchain service;
a situational awareness service; or
a network-wide trustworthiness policy service.

8. The method according to any one of claims 1 to 7, wherein the first communication apparatus and the second communication apparatus comprise any one of the following:
the first communication apparatus is a terminal apparatus, and the second communication apparatus is an access network apparatus;
the first communication apparatus is a terminal apparatus, and the second communication apparatus is a core network apparatus;
the first communication apparatus is an access network apparatus, and the second communication apparatus is a core network apparatus;
both the first communication apparatus and the second communication apparatus are access network apparatuses; or
both the first communication apparatus and the second communication apparatus are core network apparatuses.

9. The method according to any one of claims 4 to 8, wherein a combination of the first communication apparatus, the second communication apparatus, and the third communication apparatus correspondingly comprises a combination of the following three apparatuses:
a terminal apparatus, an access network apparatus, and a core network apparatus.

10. A data transmission method, applied to a first communication apparatus, wherein the first communication apparatus comprises a first protocol layer and a second protocol layer below the first protocol layer, the second protocol layer comprises a part or all of the following protocol layers: a protocol layer for data processing, a protocol layer for transmission, a protocol layer for establishing a connection, and a protocol layer for establishing a channel, and the method comprises:
processing, by the first protocol layer of the first communication apparatus, data from an upper layer to obtain an SDU corresponding to the first protocol layer, wherein the data of the upper layer comprises trustworthiness data;
mapping, by the first protocol layer of the first communication apparatus, the SDU corresponding to the first protocol layer to a bearer to obtain a PDU corresponding to the first protocol layer; and
outputting, by the first communication apparatus, the PDU corresponding to the first protocol layer.

11. The method according to claim 10, wherein the method further comprises:
adding, by the first protocol layer, a header of the first protocol layer to the SDU corresponding to the first protocol layer, to obtain the PDU corresponding to the first protocol layer.

12. The method according to claim 10 or 11, wherein processing, by the first protocol layer, the data from the upper layer to obtain the SDU corresponding to the first protocol layer comprises:
preprocessing, by the first protocol layer, the data from the upper layer to obtain preprocessed data, and processing the preprocessed data to obtain the SDU corresponding to the first protocol layer.

13. A data transmission method, applied to a second communication apparatus, wherein the second communication apparatus comprises a first protocol layer and a second protocol layer below the first protocol layer, the second protocol layer comprises a part or all of the following protocol layers: a protocol layer for data processing, a protocol layer for transmission, a protocol layer for establishing a connection, and a protocol layer for establishing a channel, and the method comprises:
receiving, by the second communication apparatus, a protocol data unit PDU corresponding to the first protocol layer, wherein the PDU corresponding to the first protocol layer is from a first communication apparatus;
determining, by the second communication apparatus, whether a termination point of the PDU corresponding to the first protocol layer is the second communication apparatus;
when the termination point of the PDU corresponding to the first protocol layer is the second communication apparatus, processing, by the second communication apparatus, the PDU corresponding to the first protocol layer to obtain a service data unit SDU corresponding to the first protocol layer; and
when the termination point of the PDU corresponding to the first protocol layer is not the second communication apparatus, forwarding and routing, by the second communication apparatus, the PDU corresponding to the first protocol layer.

14. The method according to claim 13, wherein when the termination point of the PDU corresponding to the first protocol layer is the second communication apparatus, processing, by the second communication apparatus, the PDU corresponding to the first protocol layer to obtain the service data unit SDU corresponding to the first protocol layer comprises any one of the following:
preprocessing, by the first protocol layer of the second communication apparatus, the PDU corresponding to the first protocol layer, performing, based on data obtained through preprocessing, reverse mapping from the SDU corresponding to the first protocol layer to a bearer to obtain the SDU corresponding to the first protocol layer, and processing the SDU corresponding to the first protocol layer to obtain a processed SDU corresponding to the first protocol layer; or
performing, by the first protocol layer of the second communication apparatus based on the PDU corresponding to the first protocol layer, reverse mapping from the SDU corresponding to the first protocol layer to a bearer to obtain the SDU corresponding to the first protocol layer; and processing the SDU corresponding to the first protocol layer to obtain a processed SDU corresponding to the first protocol layer; or
performing, by the first protocol layer of the second communication apparatus based on the PDU corresponding to the first protocol layer, reverse mapping from the SDU corresponding to the first protocol layer to a bearer to obtain the SDU corresponding to the first protocol layer; and processing the SDU corresponding to the first protocol layer to obtain a processed SDU corresponding to the first protocol layer, wherein the first protocol layer further comprises the following processing: removing a header of the first protocol layer of the processed SDU corresponding to the first protocol layer to obtain trustworthiness data.

15. A communication method, applied to a communication apparatus, wherein the communication apparatus comprises a MAC layer, and the method comprises:
processing, by the MAC layer, a message from an upper layer to obtain a first message, wherein the message of the upper layer comprises a trustworthiness message and/or a connection-related message; and
outputting, by the MAC layer, the first message, wherein
processing performed by the MAC on the message of the upper layer comprises one or more of the following:
mapping between a logical channel and a transport channel of a trustworthiness message;
multiplexing an SDU of the MAC layer corresponding to a trustworthiness message belonging to one or different logical channels and/or an SDU of the MAC layer corresponding to a connection-related message into a transport block TB; or
processing of scheduling priorities of a bearer of the trustworthiness message and a bearer of the connection-related message.

16. The communication method according to claim 15, wherein the communication apparatus comprises a physical layer, and the communication apparatus and the method comprises:
receiving, by the physical layer, the first message from the MAC layer;
performing, by the physical layer, security processing on the first message to obtain a second message; and
outputting, by the physical layer, the second message, wherein
the security processing comprises any one of the following:
deriving a security key of the physical layer, encrypting the first message based on the security key to obtain a ciphertext, and performing integrity protection on the ciphertext to obtain the second message; or
processing the first message by using a physical layer security technology based on precoding or coding to obtain the second message.

17. A communication method, applied to a communication apparatus, wherein the communication apparatus comprises a security module, and the method comprises:
performing, by the security module based on a security algorithm, security processing on an upper-layer message of a physical layer to obtain a first message; or
sending, by the security module, security processing information to a first module of the communication apparatus, wherein the security processing information comprises information required for the first module to perform security processing on the upper-layer message of the physical layer, and performing, by the first module, security processing on the upper-layer message of the physical layer based on the security algorithm and the security processing information to obtain the first message; and
outputting, by the security module or the first module, the first message.

18. The communication method according to claim 17, wherein the security processing comprises one or more of the following:
encrypting the upper-layer message of the physical layer to obtain a ciphertext, wherein the first message comprises the ciphertext; or
encrypting the upper-layer message of the physical layer to obtain a ciphertext, and performing integrity protection on the ciphertext to obtain the first message.

19. A communication apparatus, comprising a module or a unit configured to perform the method according to any one of claims 1 to 18.

20. A communication apparatus, comprising:
a processor, wherein the processor is coupled to a memory, and the processor is configured to execute a computer program or instructions stored in the memory, to enable the communication apparatus to perform the method according to any one of claims 1 to 18.

21. A chip, comprising a processor and a communication interface, wherein the communication interface is configured to receive to-be-processed information and/or data, and send the to-be-processed information and/or the data to the processor, and the processor is configured to process the to-be-processed information and/or the data, to enable a communication apparatus in which the chip is installed to perform the method according to any one of claims 1 to 18.

22. A computer-readable storage medium, wherein the computer-readable storage medium stores computer instructions, and when the computer instructions are run on a computer, the method according to any one of claims 1 to 18 is implemented.

23. A computer program product, wherein the computer program product comprises computer program code, and when the computer program code is run on a computer, the method according to any one of claims 1 to 18 is implemented.

24. A wireless communication system, comprising the communication apparatus according to claim 19 or 20.
